(19) **Europäisches Patentamt / European Patent Office / Office européen des brevets**

(11) **EP 4 503 718 A1**

(12) **EUROPEAN PATENT APPLICATION**
published in accordance with Art. 153(4) EPC

(43) Date of publication:
**05.02.2025 Bulletin 2025/06**

(21) Application number: **22935301.6**

(22) Date of filing: **30.03.2022**

(51) International Patent Classification (IPC):
**H04W 24/10** (2009.01)    **H04W 16/28** (2009.01)
**H04W 72/0457** (2023.01)

(52) Cooperative Patent Classification (CPC):
**H04W 16/28; H04W 24/10; H04W 72/0457**

(86) International application number:
**PCT/JP2022/016133**

(87) International publication number:
**WO 2023/188156 (05.10.2023 Gazette 2023/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NTT DOCOMO, INC.**
**Tokyo 100-6150 (JP)**

(72) Inventors:
• **MATSUMURA, Yuki**
 **Tokyo 100-6150 (JP)**
• **NAGATA, Satoshi**
 **Tokyo 100-6150 (JP)**
• **WANG, Jing**
 **Beijing 100190 (CN)**
• **CHEN, Lan**
 **Beijing 100190 (CN)**

(74) Representative: **Hoffmann Eitle**
**Patent- und Rechtsanwälte PartmbB**
**Arabellastraße 30**
**81925 München (DE)**

(54) **TERMINAL, WIRELESS COMMUNICATION METHOD, AND BASE STATION**

(57) A terminal according to one aspect of the present disclosure includes a control section that determines channel state information (CSI) between a plurality of transmission/reception points for coherent joint transmission, and a transmitting section that transmits a CSI report including the CSI. According to one aspect of the present disclosure, it is possible to appropriately perform CSI reporting for CJT.

FIG. 8

EP 4 503 718 A1

## Description

Technical Field

The present disclosure relates to a terminal, a radio communication method, and a base station in next-generation mobile communication systems.

Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

For future radio communication systems (for example, NR), reporting of channel state information (CSI) based on reference signal reception is under study. It is also studied that one or a plurality of transmission/reception points (TRPs) (single TRP (STRP) / multi-TRP (MTRP)) perform DL transmission to a terminal (user terminal, User Equipment (UE)). Coherent joint transmission (CJT) using multi-TRP is also under study.

However, progress has not been made on a study of CSI configuration/reporting for the CJT. Unless such a method is defined clearly, communication throughput, communication quality, and the like may deteriorate.

Thus, an object of the present disclosure is to provide a terminal, a radio communication method, and a base station that appropriately perform CSI reporting for CJT

Solution to Problem

A terminal according to one aspect of the present disclosure includes a control section that determines channel state information (CSI) between a plurality of transmission/reception points for coherent joint transmission, and a transmitting section that transmits a CSI report including the CSI.

Advantageous Effects of Invention

According to one aspect of the present disclosure, it is possible to appropriately perform CSI reporting for CJT.

Brief Description of Drawings

[FIG. 1] FIG. 1 shows an example of a 16-level quantization table.
[FIG. 2] FIG. 2 shows an example of an 8-level quantization table.
[FIG. 3] FIG. 3 shows an example of transmission using K CSI-RS ports.
[FIG. 4] FIGS. 4A and 4B show examples of a Rel-16 type 2 port selection codebook.
[FIG. 5] FIGS. 5A and 5B show examples of a Rel-17 type 2 port selection codebook.
[FIG. 6] FIGS. 6A and 6B show examples of NCJT and CJT.

[FIG. 7] FIGS. 7A and 7B show examples of Restriction 2.

[FIG. 8] FIG. 8 shows an example of Report 2a-1.

[FIG. 9] FIG. 9 shows an example of Report 2a-2.

[FIG. 10] FIG. 10 shows an example of Report 2b.

[FIG. 11] FIG. 11 shows an example of Option 1-1.

[FIG. 12] FIG. 12 shows another example of Option 1-1.

[FIG. 13] FIG. 13 shows an example of Option 1-2.

[FIG. 14] FIGS. 14A and 14B show examples of Option 2-A.

[FIG. 15] FIG. 15 shows an example of CJT CSI in Option 3-A.

[FIG. 16] FIG. 16 shows an example of a codebook in Option 3-A.

[FIG. 17] FIG. 17 shows an example of CJT CSI in Option 3-B.

[FIG. 18] FIG. 18 shows an example of a codebook in Option 3-B.

[FIG. 19] FIG. 19 shows an example of CJT CSI in Option 3-C.

[FIG. 20] FIG. 20 shows an example of CJT CSI in Option 3-D.

[FIG. 21] FIG. 21 shows an example of a new table for an inter-TRP amplitude codebook.

[FIG. 22] FIG. 22 shows an example of a new table for an inter-TRP phasing codebook.

[FIG. 23] FIG. 23 shows an example of a new table for an inter-TRP coefficient codebook.

[FIG. 24] FIGS. 24A and 24B show examples of mapping order of CSI parts 1 and 2 according to Embodiment #A5.

[FIG. 25] FIG. 25 is a diagram to show an example of a schematic structure of a radio communication system according to one embodiment.

[FIG. 26] FIG. 26 is a diagram to show an example of a structure of a base station according to one embodiment.

[FIG. 27] FIG. 27 is a diagram to show an example of a structure of a user terminal according to one embodiment.

[FIG. 28] FIG. 28 is a diagram to show an example of a hardware structure of the base station and the user terminal according to one embodiment.

[FIG. 29] FIG. 29 is a diagram to show an example of a vehicle according to one embodiment.

Description of Embodiments

(CSI Report (or Reporting))

In Rel-15 NR, a terminal (also referred to as a user terminal, a User Equipment (UE), and the like) generates (also referred to as determines, calculates, estimates, measures, and the like) channel state information (CSI), based on a reference signal (RS) (or a resource for the RS), and transmits (also referred to as reports, feeds back, and the like) the generated CSI to a network (for example, a base station). The CSI may be transmitted to the base station by using an uplink control channel (for example, a Physical Uplink Control Channel (PUCCH)) or an uplink shared channel (for example, Physical Uplink Shared Channel (PUSCH)), for example.

The RS used for the generation of the CSI may be at least one of a channel state information reference signal (CSI-RS), a synchronization signal/broadcast channel (Synchronization Signal/Physical Broadcast Channel (SS/PBCH)) block, a synchronization signal (SS), a demodulation reference signal (DMRS), and the like, for example.

The CSI-RS may include at least one of a non-zero power (NZP) CSI-RS and CSI-Interference Management (CSI-IM). The SS/PBCH block is a block including the SS and the PBCH (and a corresponding DMRS), and may be referred to as an SS block (SSB) or the like. The SS may include at least one of a primary synchronization signal (PSS) and a secondary synchronization signal (SSS).

Note that the CSI may include at least one of a channel quality indicator (CQI), a precoding matrix indicator (PMI), a CSI-RS resource indicator (CRI), an SS/PBCH block resource indicator (SSBRI), a layer indicator (LI), a rank indicator (RI), L1-RSRP (reference signal received power in Layer 1 (Layer 1 Reference Signal Received Power)), L1-RSRQ (Reference Signal Received Quality), an L1-SINR (Signal to Interference plus Noise Ratio), an L1-SNR (Signal to Noise Ratio), and the like.

The UE may receive information related to a CSI report (report configuration information), and may control, based on the report configuration information, CSI reporting. The report configuration information may be, for example, an information element (IE) "CSI-ReportConfig" of radio resource control (RRC). Note that, in the present disclosure, the RRC IE may be interchangeably interpreted as an RRC parameter, a higher layer parameter, and the like.

The report configuration information (for example, the RRC IE "CSI-ReportConfig") may include at least one of the following, for example.

- Information (report type information, for example, an RRC IE "reportConfigType") related to a type of the CSI report
- Information (report quantity information, for example, an RRC IE "reportQuantity") related to one or more quantities (one or more CSI parameters) of the CSI to be reported

- Information (resource information, for example, an RRC IE "CSI-ResourceConfigId") related to the resource for the RS used for generation of the quantity (the CSI parameter)
- Information (frequency domain information, for example, an RRC IE "reportFreqConfiguration") related to the frequency domain being a target of the CSI report

For example, the report type information may indicate a periodic CSI (P-CSI) report, an aperiodic CSI (A-CSI) report, or a semi-persistent (semi-permanent) CSI report (SP-CSI) report.

The report quantity information may indicate at least one combination of the above CSI parameters (for example, CRI, RI, PMI, CQI, LI, L1-RSRP, and the like).

The resource information may be an ID of the resource for the RS. The resource for the RS may include, for example, a non-zero power CSI-RS resource or SSB, and a CSI-IM resource (for example, a zero power CSI-RS resource).

The frequency domain information may indicate frequency granularity of the CSI report. The frequency granularity may include, for example, a wideband and a subband. The wideband is the entire CSI reporting band. For example, the wideband may be the entire certain carrier (component carrier (CC), cell, serving cell), or may be the entire bandwidth part (BWP) in a certain carrier. The wideband may be interpreted as CSI reporting band, the entire CSI reporting band, and the like.

The subband may be part of the wideband and constituted of one or more resource blocks (RBs or physical resource blocks (PRBs)). The size of the subband may be determined according to the size of the BWP (the number of PRBs).

The frequency domain information may indicate a PMI of which of the wideband or the subband is to be reported (frequency domain information may include, for example, an RRC IE "pmi-FormatIndicator" used for determination of one of wideband PMI reporting and subband PMI reporting). The UE may determine, based on at least one of the report quantity information and the frequency domain information, frequency granularity of the CSI report (that is, one of the wideband PMI report or the subband PMI report).

When the wideband PMI report is configured (determined), one wideband PMI may be reported for the entire CSI reporting band. On the other hand, when the subband PMI report is configured, single wideband indication i1 may be reported for the entire CSI reporting band, and subband indication (one subband indication) i2 for each of one or more subbands in the entire CSI reporting (for example, subband indication for each subband) may be reported.

The UE performs channel estimation by using a received RS to estimate a channel matrix H. The UE feeds back an index (PMI) determined based on the estimated channel matrix.

The PMI may indicate a precoder matrix (also simply referred to as a precoder) that the UE considers appropriate for the use for downlink (DL) transmission to the UE. Each value of the PMI may correspond to one precoder matrix. A set of values of the PMI may correspond to a different set of precoder matrices referred to as a precoder codebook (also simply referred to as a codebook).

In the spatial domain (space domain), the CSI report may include CSI of one or more types. For example, the CSI may include at least one of a first type (type 1 CSI) used for selection of a single beam, and a second type (type 2 CSI) used for selection of multi-beam. The single beam may be interpreted as a single layer, and the multi-beam may be interpreted as a plurality of beams. The type 1 CSI may not assume multi-user multiple input multiple output (MIMO), and the type 2 CSI may assume multi-user MIMO.

The above codebook may include a codebook for the type 1 CSI (also referred to as a type 1 codebook or the like) and a codebook for the type 2 CSI (also referred to as a type 2 codebook or the like). The type 1 CSI may include type 1 single-panel CSI and type 1 multi-panel CSI, and different codebooks (type 1 single-panel codebook, type 1 multi-panel codebook) may be defined.

In the present disclosure, Type 1 and Type I may be interchangeably interpreted. In the present disclosure, Type 2 and Type II may be interchangeably interpreted.

An uplink control information (UCI) type may include at least one of a Hybrid Automatic Repeat reQuest ACKnowledgement (HARQ-ACK), a scheduling request (SR), and CSI. UCI may be delivered on a PUCCH, or may be delivered on a PUSCH.

In Rel-15 NR, the UCI can include one CSI part for wideband PMI feedback. CSI report #n includes, if reported, PMI wideband information.

In Rel-15 NR, the UCI can include two CSI parts for subband PMI feedback. CSI part 1 includes wideband PMI information. CSI part 2 includes one piece of wideband PMI information and some pieces of subband PMI information. CSI part 1 and CSI part 2 are separately coded.

In Rel-15 NR, the UE is configured with N (N ≥ 1) report settings for CSI report configuration and M (M ≥ 1) resource settings for CSI resource configuration, by a higher layer. For example, the CSI report configuration (CSI-ReportConfig) includes a resource setting for channel measurement (resourcesForChannelMeasurement), a CSI-IM resource setting for interference (csi-IM-ResourceForInterference), an NZP-CSI-RS setting for interference (nzp-CSI-RS-ResourceForInterference), a report quantity (reportQuantity), and the like. Each of the resource setting for channel measurement, the CSI-IM resource setting for interference, and the NZP-CSI-RS setting for interference is associated with a CSI resource configuration (CSI-ResourceConfig, CSI-ResourceConfigId). The CSI resource configuration includes a list of CSI-RS resource sets (csi-RS-ResourceSetList, for example, NZP-CSI-RS resource set or CSI-IM resource set) .

For enabling, for both of FR1 and FR2, more dynamic channel/interference hypotheses for NCJT, assessment and specifications of CSI reporting for DL transmission with at least one of multi-TRP and multi-panel are under study.

(Multi-TRP)

For NR, it is studied that one or a plurality of transmission/reception points (TRPs) (multi-TRP (multi TRP (MTRP))) perform DL transmission to a UE by using one or a plurality of panels (multi-panel). It is also studied that the UE performs UL transmission to the one or plurality of TRPs by using one or a plurality of panels.

Note that the plurality of TRPs may correspond to the same cell identifier (ID) or may correspond to different cell IDs. The cell ID may be a physical cell ID or a virtual cell ID.

The multi-TRP (TRPs #1 and #2) may be connected via ideal/non-ideal backhaul to exchange information, data, and the like. Each TRP of the multi-TRP may transmit a different codeword (Code Word (CW)) and a different layer. As one mode of multi-TRP transmission, non-coherent joint transmission (NCJT) may be used.

In NCJT, for example, TRP 1 performs modulation mapping on a first codeword, performs layer mapping, and transmits a first PDSCH in a first number of layers (for example, two layers) by using first precoding. TRP 2 performs modulation mapping on a second codeword, performs layer mapping, and transmits a second PDSCH in a second number of layers (for example, two layers) by using second precoding.

Note that a plurality of PDSCHs (multi-PDSCH) transmitted by NCJT may be defined to partially or entirely overlap in terms of at least one of the time and frequency domains. In other words, the first PDSCH from a first TRP and the second PDSCH from a second TRP may overlap in terms of at least one of the time and frequency resources.

The first PDSCH and the second PDSCH may be assumed not to be in a quasi-co-location (QCL) relationship (not to be quasi-co-located). Reception of the multi-PDSCH may be interpreted as simultaneous reception of PDSCHs of a QCL type other than a certain QCL type (for example, QCL type D).

A plurality of PDSCHs (which may be referred to as multi-PDSCH (multiple PDSCHs)) from the multi-TRP may be scheduled by using one piece of DCI (single DCI (S-DCI), single PDCCH) (single master mode). The one piece of DCI may be transmitted from one TRP of the multi-TRP. The plurality of PDSCHs from the multi-TRP may be separately scheduled by using a plurality of DCI (multi-DCI (M-DCI), multi-PDCCH (multiple PDCCHs)) (multi-master mode). The plurality of DCI may be transmitted from the respective multi-TRP. The UE may assume that separate CSI reports related to respective TRPs are transmitted to different TRPs. Such CSI feedback may be referred to as separate feedback, separate CSI feedback, and the like. In the present disclosure, "separate" may be interchangeably interpreted as "independent."

Note that CSI feedback for transmitting, for one TRP, a CSI report related to both TRPs may be used. Such CSI feedback may be referred to as joint feedback, joint CSI feedback, and the like.

For example, in a case of the separate feedback, the UE is configured to transmit a CSI report for TRP #1 to TRP #1 by using a certain PUCCH (PUCCH 1) and to transmit a CSI report for TRP #2 to TRP #2 by using another PUCCH (PUCCH 2). In a case of the joint feedback, the UE transmits, to TRP #1 or #2, a CSI report for TRP #1 and a CSI report for TRP #2.

According to such a multi-TRP scenario, more flexible transmission control using a channel with satisfactory quality is available.

(Codebook Configuration)

The UE is configured with a codebook-related parameter (codebook configuration (CodebookConfig)) by higher layer signaling (RRC signaling). The codebook configuration is included in a CSI report configuration (CSI-ReportConfig) of a higher layer (RRC) parameter.

In the codebook configuration, at least one codebook of a type 1 single panel (typeI-SinglePanel), type 1 multi-panel (typeI-MultiPanel), type 2 (typeII), and type 2 port selection (typeII-PortSelection) is selected.

The codebook parameter includes a parameter related to codebook subset restriction (CBSR) (...Restriction). Configuration of the CBSR is a bit indicating, for a precoder associated with a CBSR bit, which PMI report is allowed ("1") and which PMI report is not allowed ("0"). 1 bit of a CBSR bitmap corresponds to one codebook index / antenna port.

(CSI Report Configuration)

CSI report configuration (CSI-ReportConfig) of Rel. 16 includes CSI-RS resources for channel measurement (resourcesForChannelMeasurement (CMRs)), CSI-RS resources for interference measurement (csi-IM-ResourcesFor-Interference (ZP-IMRs), nzp-CSI-RS-ResourcesForInterference (NZP-IMRs)), and the like, in addition to a codebook configuration (CodebookConfig). The parameters of CSI-ReportConfig excluding codebookConfig-r16 are also included in CSI report configuration of Rel. 15.

For Rel. 17, enhanced CSI report configuration (CSI-ReportConfig) for multi-TRP CSI measurement/reporting using NCJT is under study. In the CSI report configuration, two CMR groups corresponding to two respective TRPs are configured. CMRs in the CMR groups may be used for measurement of at least one of multi-TRP using NCJT and a single TRP. N CMR pairs for NCJT are configured by RRC signaling. Whether CMRs of a CMR pair are to be used for single TRP measurement may be configured for the UE by RRC signaling.

For CSI reporting associated with multi-TRP/panel NCJT measurement and configured by a single CSI report configuration, support of at least one of Options 1 and 2 below is under study.

<Option 1>

The UE is configured to report X (X = 0, 1, 2) pieces of CSI associated with single TRP measurement hypotheses and one piece of CSI associated with NCJT measurement. When X = 2, two pieces of CSI are associated with two different single TRP measurements using CMRs of different CMR groups.

<Option 2>

The UE may be configured to report one piece of CSI associated with the best measurement result of measurement hypotheses for NCJT and a single TRP.

As described above, in Rel. 15/16, CBSR is configured for each codebook configuration for each CSI report configuration. In other words, the CBSR is applied to all the CMRs and the like in corresponding CSI reporting configuration.

Note, however, that there is a possibility that when the Options 1 and 2 above are applied to multi-TRP CSI report configuration of Rel. 17 by CSI report configuration, configuration of the following measurement is performed.

Option 1 (X = 0): measurement of only CSI for NCJT
Option 1 (X = 1): measurement of CSI for NCJT and CSI for single TRP (one TRP)
Option 1 (X = 2): measurement of CSI for NCJT and CSI for single TRP (two TRPs)
Option 2: measurement of both of CSI for NCJT and CSI for single TRP

(Type 2 CSI)

Based on the assumption of ideal backhaul, synchronization, and the same number of antenna ports over a plurality of TRPs, CSI acquisition for coherent joint transmission (CJT) for FR1 and up to four TRPs is under study. For CJT multi-TRP for FDD, improvement of a type 2 codebook of Rel. 16/17 is under study.

In the present disclosure, matrix Z with X rows and Y columns is sometimes expressed as $Z(X \times Y)$.

For type 2 CSI of Rel. 15, generation of per-subband (SB-wise) precoding vectors is based on the following equation for given layer k.

$$W_k(N_t \times N_3) = W_1 W_{2,k} \quad (1)$$

$N_t$ is the number of ports. $N_3$ is a total number of precoding matrices (number of subbands) indicated by a PMI. L is the number of beams. $W_1(N_t \times 2L)$ is a matrix formed by $L \in \{2, 4\}$ spatial domain (SD) twodimensional (2D) DFT vectors (SD beam vectors, 2D-DFT vectors). For example, L=2 SD 2D-DFT vectors are $b_i$ and $b_j$. $W_{2,k}(2L \times N_3)$ is a subband complex linear combination (LC) coefficient (combination coefficients) matrix for layer k. For example, two $W_{2,k}$ are $c_i$ and $c_j$. For example, channel matrix h is approximated by linear combination of L=2 SD 2D-DFT vectors $c_i b_i, + c_j b_j$. Feedback overhead is primarily caused by LC coefficient matrix $W_{2,k}$. The type 2 CSI of Rel. 15 supports only ranks 1 and 2.

Type 2 CSI of Rel. 16 reduces overhead related to $W_{2,k}$ by using frequency domain (FD) compression. The type 2 CSI of Rel. 16 supports ranks 3 and 4 in addition to ranks 1 and 2.

For the type 2 CSI of Rel. 16, information based on the following equation may be reported by the UE for given layer k.

$$W_k = W_1 \tilde{W}_k W_{f,k}^H \quad (2)$$

$W_{2,k}$ is approximated by $W\sim_k W_{f,k}^H$. Matrix $W\sim$ may be expressed by adding $\sim$ to the top of W (tilde on w). Matrix $W_{f,k}^H$ is an adjoint matrix of $W_{f,k}$.

For a CSI report, the UE may be configured with one of two subband sizes. The subband (CQI subband) may be defined as $N_{PRB}^{SB}$ consecutive PRBs, and may depend on a total number of PRBs in a BWP. The number R of PMI subbands per CQI subband is configured by an RRC IE (numberOfPMI-SubbandsPerCQI-Subband). R controls a total number $N_3$ of precoding matrices indicated by a PMI, as a function of the number of subbands configured in csi-ReportingBand, a subband size configured by subbandSize, and a total number of PRBs in a BWP.

$W_1(N_t \times 2L)$ is a matrix formed by a plurality of spatial domain (SD) 2D-DFT (vectors). For this matrix, a plurality of indices of twodimensional discrete Fourier transform (2D-DFT) vectors and a twodimensional over-sampling factor are reported. Response/distribution of a spatial domain indicated by an SD 2D-DFT vector may be referred to as an SD beam.

$W\sim_k(2L \times M_v)$ is a matrix formed by combination coefficients (subband complex linear combination (LC) coefficients). For this matrix, up to Ko non-zero coefficients (NZCs) are reported. The report is formed by two parts: a bitmap for identifying an NZC location, and a quantized NZC.

$W_{f,k}(N_3 \times M_v)$ is a matrix formed by a plurality of frequency domain (FD) bases (vectors) for layer k. $M_v$ FD bases (FD DFT bases) are present for each layer. When $N_3 > 19$, $M_v$ DFTs from an intermediate subset (InS) of size $N_3'$ ($<N_3$) are selected. When $N_3 \leq 19$, $\log_2(C(N_3-1, M_v-1))$ bits are reported. Here, $C(N_3-1, M_v-1)$ is the number of combinations to select $M_v-1$ from $N_3-1$, and is also referred to as binomial coefficients. Response/distribution (frequency response) of a frequency domain indicated by an FD base vector and linear combination of combination coefficients may be referred to as an FD beam. The FD beam may correspond to a delay profile (time response).

A subset of FD bases is given as $\{f_1, ..., f_{Mv}\}$. Here, $f_i$ is the i th FD base for the k th layer, and i G $\{1, ..., M_v\}$. A PMI subband size is given by a CQI subband size / R, and R G $\{1, 2\}$. The number $M_v$ of FD bases for given rank v is given by $ceil(p_v \times N_3/R)$. The number of FD bases is the same for all the layers k G $\{1, 2, 3, 4\}$. $p_v$ is configured by a higher layer.

Each row of matrix $W_{2,k}$ indicates channel frequency response of a specific SD beam. When the SD beam has high directivity, a channel tap per beam is limited (power delay profile becomes sparse in the time domain). As a result, channel frequency response for each SD beam has high correlation (becomes close to a flat form in the frequency domain). In this case, the channel frequency response can be approximated by linear combination of a small number of FD bases. For example, when $M_v = 2$, by using FD bases $f_2$, $f_q$ and linear combination coefficients $d_1^0$, $d_2^0$, frequency response associated with SD beam bo is approximated by $d_1^0 f_2 +$, $d_2^0 f_q$.

$M_v$ FD bases are selected for the highest gain. With $M_v << N_3$, overhead of $W\sim_k$ is much smaller than overhead of $W_{2,k}$. All or some of the $M_v$ FD bases are used to approximate frequency response of each SD beam. A bitmap is used to report only an FD base selected for each SD beam. If no bitmap is reported, all the FD bases are selected for each SD beam. In this case, non-zero (nonzero) coefficients (NZCs) of all the FD bases are reported for each SD beam. A maximum number of NZCs in one layer $K_k^{NZ} \leq Ko = ceil(\beta \times 2LM_v)$, and a maximum number of NZCs over all the layers $K^{NZ} \leq 2Ko = ceil(\beta \times 2LM_v)$. $\beta$ is configured by a higher layer.

Each reported complex coefficient in $W\sim_k$ is separately quantized amplitude and phase.

{Amplitude Quantization}

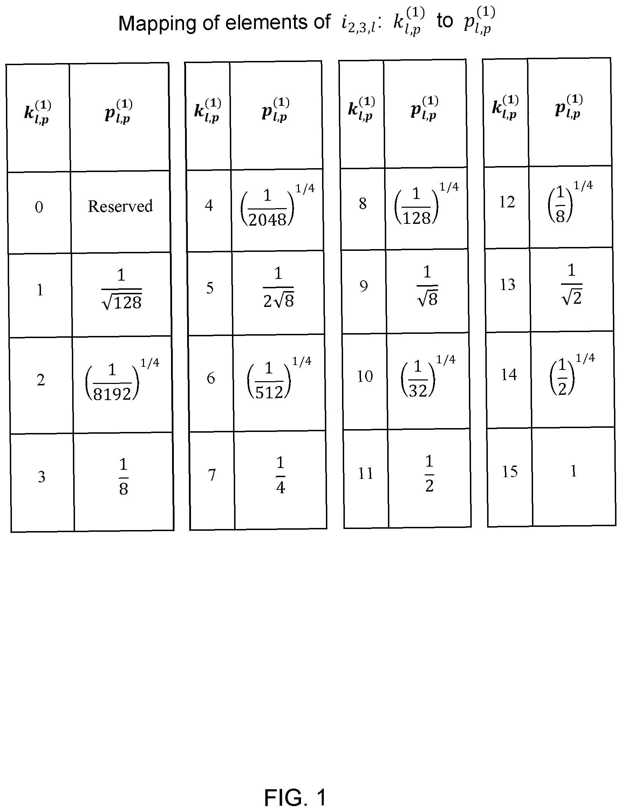

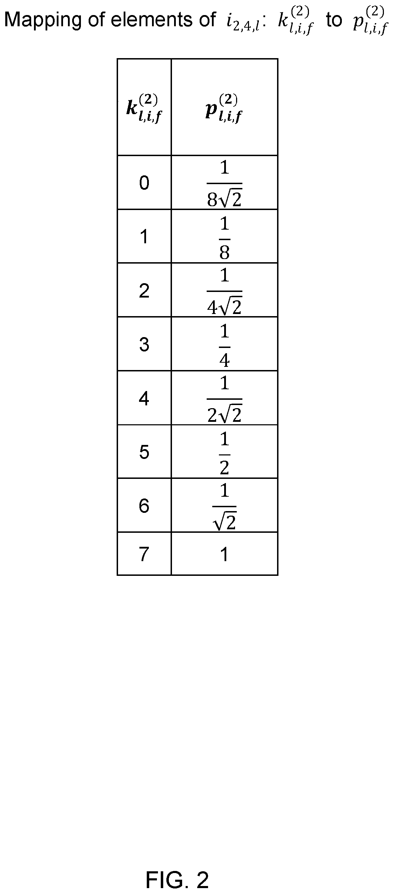

Polarization-specific reference amplitude is 16-level quantization using a table in FIG. 1. All the other coefficients are 8-level quantization using a table in FIG. 2.

{Phase Quantization}

All the coefficients are quantized by using 16-PSK. For example, $\varphi_{l,i} = \exp(j2\pi c_{l,i}/16)$, $c_{l,i}$ G $\{0, ..., 15\}$. Here, $c_{l,i}$ is a phase coefficient reported by the UE (using 4 bits) for associated phase value $\varphi_{l,i}$.

Type 2 CSI feedback on a PUSCH in Rel. 16 includes two parts. Part 1 has a fixed payload size, and is used to identify the number of information bits in part 2. In enhanced type 2 CSI feedback, part 1 includes an RI, a CQI, and an indication of a total number of non-zero amplitudes over a plurality of layers for enhanced type 2 CSI. Fields of Part 1 are separately coded. Part 2 includes a PMI of enhanced type 2 CSI. Parts 1 and 2 are separately coded. CSI part 2 (PMI) includes at least one of an oversampling factor, an index of a 2D-DFT base, an index $M_{initial}$ of an initial DFT base (start offset) of a selected DFT window, a DFT base selected for each layer, a non-zero LC coefficient (NZC, amplitude and phase) per layer, a strongest (maximum strength) coefficient indicator (SCI) per layer, and amplitude of the strongest coefficient per layer / per polarization.

A plurality of PMI indices (PMI values, codebook indices) associated with different pieces of CSI part 2 information may follow the following for the k th layer.

- $i_{1,1}$: oversampling factor
- $i_{1,2}$: plurality of indices of 2D-DFT bases

- $i_{1,5}$: index (start offset) $M_{initial}$ of initial DFT base of selected DFT window
- $i_{1,6,k}$: DFT base selected for k th layer
- $i_{1,7,k}$: bitmap for k th layer
- $i_{1,8,k}$: strongest (maximum strength) coefficient indicator (SCI) for k th layer
- $i_{2,3,k}$: amplitude of strongest coefficient (for both polarizations) for k th layer
- $i_{2,4,k}$: amplitude of reported coefficient for k th layer
- $i_{2,5,k}$: phase of reported coefficient for k th layer

$i_{1,5}$ and $i_{1,6,k}$ are PMI indices for DFT base reporting. $i_{1,5}$ is reported only when $N_3 > 19$.

As grouping of CSI parts 2, for a given CSI report, PMI information is grouped into three groups (groups 0 to 2). This is important for a case where CSI omission is performed. Each reported element of indices $i_{2,4,l}$, $i_{2,5,l}$, and $i_{1,7,l}$ is associated with a specific priority rule. Groups 0 to 2 follow the following.

- Group 0: indices $i_{1,1}$, $i_{1,2}$ and $i_{1,8,l}$ (1 = 1, ..., v)
- Group 1: highest (higher) $v2LM_v$-floor($K^{NZ}/2$) priority elements in index $i_{1,5}$ (if reported) and indices $i_{1,6,l}$ and $i_{1,7,l}$ (if reported), highest (higher) ceil ($K^{NZ}/2$) -v priority elements in $i_{2,3,l}$ and $i_{2,4,l}$, and highest (higher) ceil($K^{NZ}/2$)-v priority elements in $i_{2,5,l}$ (1 = 1, ..., v)
- Group 2: lowest (lower) floor($K^{NZ}/2$) priority elements in $i_{1,7,l}$, lowest (lower) floor($K^{NZ}/2$) priority elements in $i_{2,4,l}$, and lowest (lower) floor($K^{NZ}/2$) priority elements in $i_{2,5,l}$ (1 = 1, ..., v)

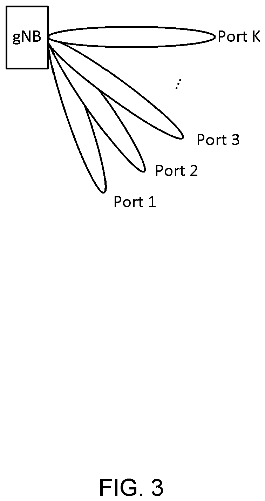

In type 2 port selection (PS) CSI of Rel. 16, a type 2 PS codebook (CB) does not require the UE to derive an SD beam in consideration of 2D-DFT in a normal type 2 CB. Alternatively, a base station transmits CSI-RSs by using K CSI-RS ports beamformed in consideration of a set of SD beams (FIG. 3). The UE identifies the best L ($\leq$K) CSI-RS ports, and reports indices of these ports in $W_1$.

In type 1 CSI, an SD beam indicated by an SD DFT vector is transmitted to the UE. In type 2 CSI, L SD beams are linearly coupled and transmitted to the UE. Each SD beam can be associated with a plurality of FD beams. For corresponding SD beams, channel frequency response can be obtained by using linear combination of FD base vectors for the SD beams. The channel frequency response corresponds to the power delay profile.

For layer k G {1, 2, 3, 4}, per-subband (subband (SB)-wise) precoder generation is given by the following equation.

$$W_k(N_t \times N_3) \;=\; QW_1 W\sim_k W_{f,k}{}^H \quad (3)$$

Here, $Q(N_t \times K)$ indicates K SD beams used for CSI-RS beamforming. $W_1(K \times 2L)$ is a block diagonal matrix. $W\sim_k$ ($2L \times M$) is an LC coefficient matrix. $W_{f,k}(N_3 \times M)$ is formed by $N_3$ DFT base vectors (FD base vectors). K is configured by a higher layer. L is configured by a higher layer. $P_{CSI-RS}$ G {4, 8, 12, 16, 24, 32}. When $P_{CSI-RS} > 4$, L G {2,3,4}.

(Rel-17 Type 2 Port Selection CSI)

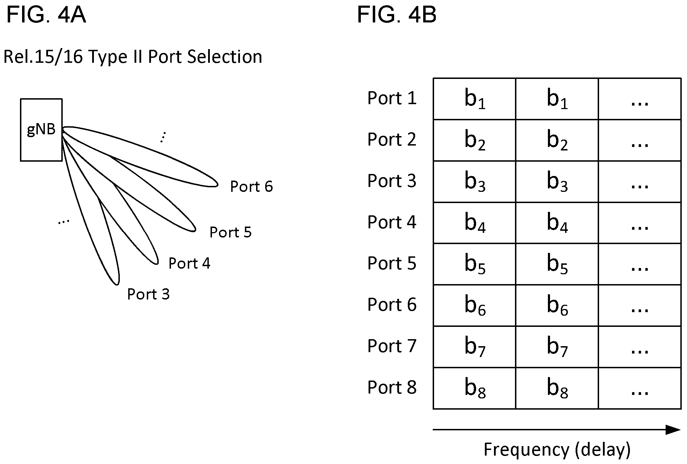

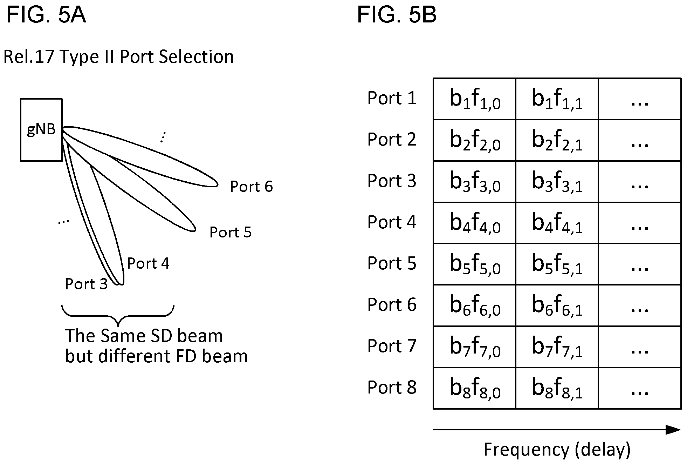

In type 2 port selection CSI/codebook of Rel. 15/16, each CSI-RS port #i is associated with an SD beam ($b_i$) (FIGS. 4A and 4B). In type 2 port selection CSI/codebook of Rel. 17 (enhanced type 2 port selection codebook), each CSI-RS port #i is associated with an SD-FD beam pair (pair of SD beam $b_i$ and FD beam $f_{i,j}$ (where j is a frequency index)) in place of an SD beam (FIGS. 5A and 5B). In this example, ports 3 and 4 are associated with the same SD beam and are associated with different FD beams.

Frequency selectivity of channel frequency response observed by the UE, based on an SD beam-FD beam pair can be reduced by delay precompensation more than frequency selectivity of channel frequency response observed by the UE, based on an SD beam.

A primary scenario for the type 2 port selection codebook of Rel. 17 is FDD. Channel reciprocity based on SRS measurement is not perfect, but the base station can obtain some pieces of partial information. By using SRS measurement by the base station in addition to CSI reporting, the base station can obtain CSI for determination of a DL MIMO precoder. In this case, some CSI reports may be omitted to reduce CSI overhead.

In type 2 PS CSI of Rel. 17, each CSI-RS port is beamformed by using an SD beam and an FD base vector. Each port is associated with an SD-FD pair.

For given layer k, information based on the following equation may be reported by the UE.

$$W_k(K \times N_3) \;=\; W_1 W\sim_k W_{f,k}{}^H \quad (4)$$

For $W_1(K\times2L)$, each matrix block is formed by L columns of a $K\times K$ identity matrix. The base station transmits K beamformed CSI-RS ports. Each port is associated with an SD-FD pair. The UE selects L ports from K ports, and reports, as part of PMI($W_{1,k}$), the selected ports to the base station.

$W\sim_k(2L\times M_v)$ is a matrix formed by combination coefficients (subband complex LC coefficients). UP to Ko NZCs are reported. The report is formed by two parts: a bitmap for identifying an NZC location, and a quantized NZC. In a specific case, the bitmap can be omitted.

$W_{f,k}(N_3\times M_v)$ is a matrix formed by $N_3$ FD base (FD DFT base) vectors. $M_v$ FD bases are present for each layer. The base station may delete $W_{f,k}$. When $W_{f,k}$ is ON, $M_v$ additional FD bases are reported. When $W_{f,k}$ is OFF, no additional FD bases are reported.

For NCJT CSI of Rel. 17, two CMR groups with $K_s$ (=K1+K2) CMRs are configured for the UE. K1 and K2 are the numbers of CMRs in the two respective CMR groups. By being selected from all the possible pairs, N CMR pairs are configured by a higher layer. N = 1 and $K_s$ = 2 are supported. $N_{max}$ = 2 is an optional feature of the UE. $K_{s,max}$ = 2 is an optional feature of the UE.

The UE may support at least one of the following two options.

{Option 1}

The UE may be configured to report X pieces of CSI associated with single-TRP measurement hypotheses and one piece of CSI associated with an NCJT measurement hypothesis. X may equal 0, 1, 2. When X = 2, two pieces of CSI are associated with different single-TRP measurement hypotheses using a plurality of CMRs from different CMR groups. Support of X = 1, 2 is an optional feature for Option 1.

{Option 2}

The UE may be configured to report one piece of CSI associated with the best hypothesis of NCJT measurement hypotheses and single-TRP measurement hypotheses.

(JT)

Joint transmission (JT) may mean simultaneous data transmission from a plurality of points (for example, TRPs) to a single UE.

Rel. 17 supports NCJT from two TRPs. PDSCHs from the two TRPs may be independently precoded and independently decoded. Frequency resources may be non-overlapping, partially overlapping (partial-overlapping), or fully overlapping (full-overlapping). When the overlap occurs, a PDSCH from one TRP interferes with a PDSCH from another TRP.

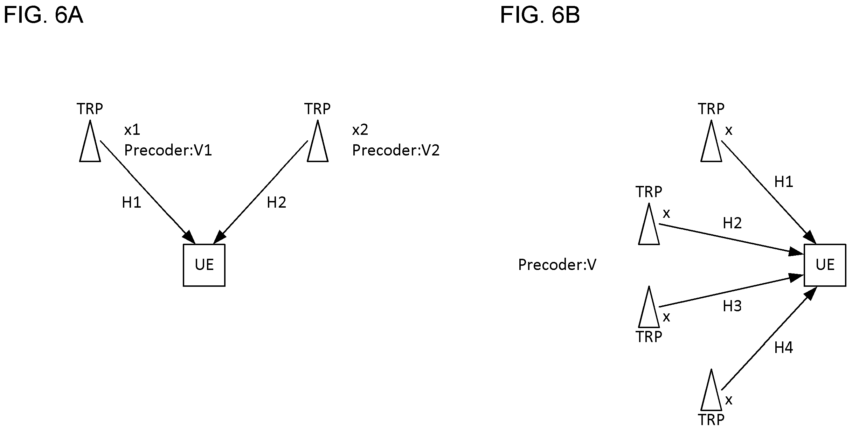

FIG. 6A shows an example of the NCJT from two TRPs. Signal $X_1$ from a first TRP is precoded by precoding matrix $V_1$ and transmitted, is affected by channel matrix $H_1$, and is received as signal $y_1$. Signal $x_2$ from a second TRP is precoded by precoding matrix $V_2$ and transmitted, is affected by channel $H_2$, and is received as signal $y_2$. Layer i may be from one TRP. Here, $H_1$ may equal $U_1\Sigma V_1^H$, $H_2$ may equal $U_2\Sigma V_2^H$, $y_1$ may equal $H_1V_1x_1$, and $y_2$ may equal $H_2V_2x_2$.

For Rel. 18, support of CJT using up to four TRPs is under study. Data from four TRPs may be coherently precoded and transmitted to the UE on the same time-frequency resource. For example, the same precoding matrix may be used in consideration of channels from four TRPs. Coherent may mean that phases of a plurality of received signals have a certain relationship with each other. Signal quality may be improved by using 4-TRP joint precoding, and there may be no interference between the four TRPs. The data may receive only interference outside the four TRPs.

FIG. 6B shows an example of the CJT from four TRPs. Signals from first to fourth TRPs are precoded by precoding matrix V and transmitted. Signals x from the first to fourth TRPs are affected by channel matrices $H_1$, $H_2$, $H_3$, and $H_4$, respectively, and are received as signals y. Layer i may be from four TRPs. Here, H may equal $H_1+H_2+H_3+H_4 = U\Sigma V^H$ and y may equal HVx.

In an ideal case (where the four TRPs are collocated (assumed to be located at the same position)), joint estimation of aggregated channel matrix H can be performed and joint precoding matrix V can be fed back. However, there is a case where large-scale path losses of four paths are significantly different from each other. Joint precoding matrix V based on a constant module codebook is not exact. In this case, feedback per TRP and an inter-TRP coefficient can be consistent with each other by a type 2 codebook of existing NR.

For CJT with up to four TRPs in FR1, selection of four TRPs may be semi-static. Thus, the selection and configuration of four CMRs (four CSI-RS resources) for channel measurement may also be semi-static. Dynamic indication of four TRPs from a list of CSI-RS resources is also available, but is unlikely.

Path losses from the respective four TRPs to the UE are different from each other. Thus, it is difficult to perform the dynamic indication only by reporting one piece of aggregated CSI indicating a joint channel matrix.

In consideration of operation for fallback to NCJT (that is, a single TRP), CSI per TRP (that is, single-TRP CSI such as NCJT CSI of Rel. 17) is also important.

The following is under study.

- CMR and IMR for measurement of up to four TRPs
- CSI per TRP with inter-TRP CSI feedback for X-TRP CJT (CJT using X TRPs)
- Inter-TRP CSI: new feedback and codebook for inter-TRP phasing matrix / inter-TRP amplitude matrix / inter-TRP matrix (including both amplitude and phase)
- X-TRP CJT CQI capable of being added and reported

Here, the following issues are conceivable.

(Issue 1) If CMRs for X TRPs are configured in one CSI report configuration (CSI-ReportConfig), and CSI per TRP is reported in one CSI report, how restriction/relationship on/with the CSI per TRP serves.

(Issue 2) If CMRs for X TRPs are configured in one CSI report configuration (CSI-ReportConfig), and CSI per TRP is reported in one CSI report, how ordering/operation of/for UE measurements serves.

(Issue 3) How details of codebooks and feedback for TRPs serve.

Thus, the inventors of the present invention came up with the idea of a method for configuring/reporting CSI for CJT.

Embodiments according to the present disclosure will be described in detail with reference to the drawings as follows. Note that respective embodiments (for example, respective cases) below may each be employed individually, or at least two of the respective embodiments may be employed in combination.

In the present disclosure, "A/B" and "at least one of A and B" may be interchangeably interpreted. In the present disclosure, "A/B/C" may mean "at least one of A, B, and C."

In the present disclosure, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

In the present disclosure, time domain resource allocation and time domain resource assignment may be interchangeably interpreted.

In the present disclosure, a beam, an SD beam, an SD vector, and an SD 2D-DFT vector may be interchangeably interpreted. L, the number of SD beams, the number of beams, and the number of SD 2D-DFT vectors may be interchangeably interpreted.

In the present disclosure, an FD base, an FD DFT base, a DFT base, and $f_i$ may be interchangeably interpreted. In the present disclosure, an FD beam, an FD vector, an FD base vector, an FD DFT base vector, and a DFT base vector may be interchangeably interpreted.

(Radio Communication Method)

In each of the respective embodiments, at least one of the type 2 CSI reporting of Rel. 16, type 2 port selection CSI reporting of Rel. 16, and type 2 port selection CSI reporting of Rel. 17 described above may be regarded as single TRP CSI.

In each of the respective embodiments, X TRPs and X-TRP may be interchangeably interpreted. In each of the respective embodiments, CJT using X TRPs and X-TRP CJT may be interchangeably interpreted.

In each of the respective embodiments, reference CSI, CSI for a reference TRP, and CSI to be reported first may be interchangeably interpreted. In each of the respective embodiments, a reference TRP, CSI corresponding to reference CSI, a TRP corresponding to CSI to be reported first, and a CSI-RS resource / CMR / CMR group / CSI-RS resource set corresponding to CSI to be reported first may be interchangeably interpreted. In each of the respective embodiments, a TRP, a CSI-RS resource, a CMR, a CMR group, and a CSI-RS resource set may be interchangeably interpreted.

In each of the respective embodiments, inter-TRP, inter-TRP difference, and inter-TRP comparison may be interchangeably interpreted.

In each of the respective embodiments, an inter-TRP phase index and an inter-TRP phasing index may be interchangeably interpreted. In each of the respective embodiments, an inter-TRP index and an inter-TRP coefficient index may be interchangeably interpreted.

In each of the respective embodiments, an inter-TRP phase matrix and an inter-TRP phasing matrix may be interchangeably interpreted. In each of the respective embodiments, an inter-TRP matrix and an inter-TRP coefficient matrix may be interchangeably interpreted.

In each of the respective embodiments, an inter-TRP phase codebook and an inter-TRP phasing codebook may be interchangeably interpreted. In each of the respective embodiments, an inter-TRP codebook and an inter-TRP coefficient codebook may be interchangeably interpreted.

In each of the respective embodiments, a target resource, a CMR, a CSI-RS resource, an NZP-CSI-RS resource, a CMR group, a CSI-RS resource set, an NZP-CSI-RS resource set, and a TRP may be interchangeably interpreted.

In each of the respective embodiments, an inter-TRP codebook and a multi-panel codebook for a type 2 codebook may be interchangeably interpreted.

In each of the respective embodiments, operation for inter-TRP codebook reporting may be similar to operation for inter-panel codebook reporting.

In each of the respective embodiments, an FD base vector size, the number of FD bases, an $M_v$ size, $M_v$, and $M_{v,i}$ may be interchangeably interpreted.

<Embodiment #1>

If reporting of CSI per TRP in one CSI report is configured for CJT CSI, one or more restrictions of Restrictions 1 to 3 below may be considered for the CSI per TRP.

<<Restriction 1»

For measurement of the CSI per TRP, the same RI is assumed. Only a common RI report may be required. For example, an RI report may be included in the first CJT CSI, and an RI report may not be included in the second/third/fourth CJT CSI. If an RI report varies for the CSI per TRP, a base station has difficulties in updating these RIs for the CJT CSI.

<<Restriction 2»

At least one of a common parameter and a separated parameter is configured for each TRP. Here, each TRP, each CMR, each CMR group, and each CMR set may be interchangeably interpreted. The parameter may be indicated by at least one parameter field of the following.

- Field (paramCombination) indicating combination of supported parameters (codebook parameters) (value/index corresponding to combination of at least one value of L, $p_v$, $\beta$, a, and M)
- Field (numberOfPMI-SubbandsPerCQI-Subband) indicating how PMI subband is defined per CQI subband
- Number L of beams (numberOfBeams) used for linear combination
- PSK alphabet Size, QPSK or 8-PSK (phaseAlphabetSize)
- Field (subbandAmplitude) that is true if subband amplitude reporting is activated

- Value of N (valueOfN) (for which parameter N G {2, 4} is configured when M = 2, for example)

In Rel. 15/16/17, these parameters are configured, per CSI report configuration (CSI-ReportConfig), per codebook configuration (CodebookConfig). In CJT CSI configuration, some of these parameters may be configured per TRP. In the CJT CSI configuration, CSI for the second/third/fourth TRP may have coarser feedback granularity and smaller overhead than those of CSI for the first TRP. In paramCombination, different combinations of $(L, p_v, \beta)$ may be configured. For the CJT CSI configuration, paramCombination may configure some TRP-common parameters (for example, common L) and some TRP-specific parameters (for example, $p_v$, $\beta$).

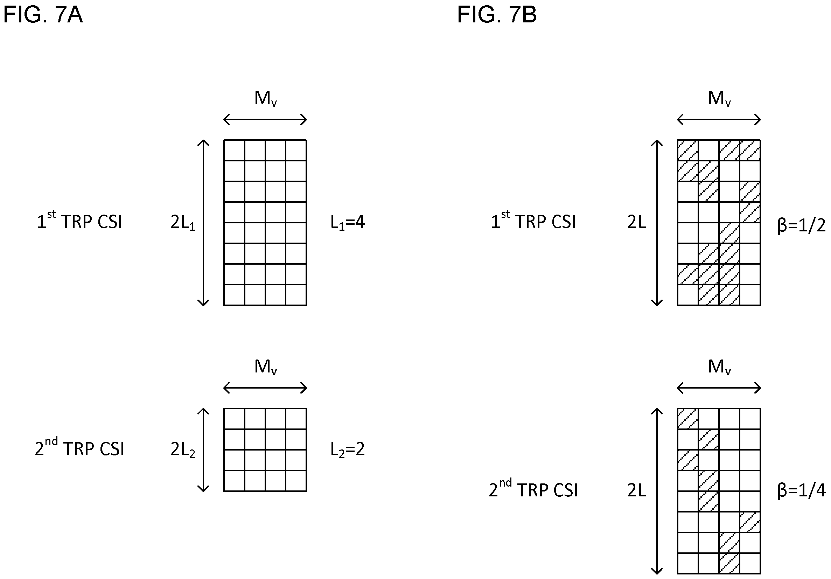

FIG. 7A shows an example of W~ for the first TRP and W~ for the second TRP. As shown in this example, different numbers L ($L_1$, $L_2$) of SD beams may be configured for CSI for the first TRP and CSI for the second TRP.

FIG. 7B shows another example of W~ for the first TRP and W~ for the second TRP. As shown in this example, the same number L of SD beams and a different maximum number of NZCs ($\beta$ = 1/2, 1/4) per layer and per TRP may be configured.

<<Restriction 3»

In CSI-ReportConfig, at least one of Configurations 3a to 3d below is introduced to all the X TRPs (all the CMRs/IMRs) .

{Configuration 3a} Maximum number of non-zero coefficients (NZCs) for respective layers of all X TRPs in CSI-ReportConfig
{Configuration 3b} Maximum number of NZCs for all layers of all X TRPs in CSI-ReportConfig
{Configuration 3c} Maximum number of SD beams for all X TRPs in CSI-ReportConfig
{Configuration 3d} Maximum number of FD bases (FD base vector size) $M_v$ for all X TRPs in CSI-ReportConfig

UE capability signaling for at least one of Restrictions 1 to 3 may be introduced.

According to this embodiment, the UE can appropriately report CSI for each X TRPs in one CSI report, based on restriction/relationship.

<Embodiment #2>

If reporting of CSI per TRP in one CSI report is configured for CJT CSI, ordering/operation of/for measurements may follow at least one of Operations 1 to 4 below.

<<Operation 1»

First, (based on the assumption of single-TRP reception) the best TRP/CRI/CSI (CSI for the first TRP, first CJT CSI) is selected. Next, based on the assumption of 2-TRP CJT reception, CSI for the second TRP is measured based on the first CJT CSI. Next, based on the assumption of 3-TRP CJT reception, CSI for the third TRP is measured based on the first and second CJT CSI. Next, based on the assumption of 4-TRP CJT reception, CSI for the fourth TRP is measured based on the first, second, and third CJT CSI. In this case, in measurement of the second, third, and fourth TRP CSI, a UE may assume different receive beam forming matrices.

<<Operation 2»

First, (based on the assumption of single-TRP reception) the best TRP/CRI/CSI (CSI for the first TRP, first CJT CSI) is selected. Next, based on the assumption of 2-TRP CJT reception, CSI for the second TRP is measured based on the first CJT CSI (the same applies to CSI for the third and fourth TRPs). In this case, in measurement of the second, third, and fourth TRP CSI, the UE may assume the same receive beam forming matrix.

<<Operation 3>>

First, (based on the assumption of single-TRP reception) the best TRP/CRI/CSI (CSI for the first TRP, first CJT CSI) is selected. Next, based on the assumption of 4-TRP CJT reception, CSI for the second, third, and fourth TRPs is measured based on the first CJT CSI. In this case, in measurement of the second, third, and fourth TRP CSI, the UE may assume the same receive beam forming matrix.

<<Operation 4>>

Based on the assumption of 4-TRP CJT reception, CSI for the first, second, third, and fourth TRPs is measured. In this case, in measurement of the first, second, third, and fourth TRP CSI, the UE may assume the same receive beam forming matrix.

UE capability signaling for at least one of Operations 1 to 4 may be introduced.

According to this embodiment, the UE can appropriately perform measurement for reporting of CSI for each X TRPs in one CSI report.

<Embodiment #3>

For inter-TRP CSI/PMI (for example, inter-TRP amplitude and inter-TRP phase, or only inter-TRP phase), a UE may follow at least one of Reports 1 to 2 below.

<<Report 1»

Independent codebook and feedback for the inter-TRP CSI/PMI may be present before (above) an existing Rel-16/17 type 2 codebook. The independent codebook and feedback may follow at least one of Embodiments #A1 to #A6. The inter-TRP CSI/PMI may follow at least one of Reports 1A to 1B below.

{Report 1A}

A size of matrix $W_2$ for the inter-TRP CSI/PMI is $1 \times 1$. This means that an inter-TRP PMI between two TRPs is considered. In this case, $W_2$ may be common to a plurality of layers.

{Report 1B}

A size of matrix $W_2$ for the inter-TRP CSI/PMI is $N_t \times N_t$, or is $K \times K$ based on Rel-17 type 2 port selection CSI. This means that an inter-TRP PMI between respective antenna ports from two TRPs is considered. In this case, $W_2$ may be common to a plurality of layers.

The first CJT CSI for layer 1 of the first TRP (best TRP) may be expressed by the following equation.

$$W_{1,1}(N_t \times N_3) = W_1 W \sim_k W_{f,k}^H \quad (a-1)$$

The first CJT CSI for layer 1 of the first TRP (best TRP) may be expressed by the following equation.

$$W'_{1,i}(N_t \times N_3) = W_{2,i} W_1 W \sim_k W_{f,k}^H \quad (a-2)$$

$W_{2,i}(1 \times 1)$ or $W_{2,i}(N_t \times N_t)$ where i may be an index of a TRP / CMR / CMR group.

A base station may update 4-TRP CJT CSI, based on reporting of $W_{2,i}$, as with the principle of a multi-panel codebook. In this example, the base station may update $W'_{l,i}$ for layer 1 of TRP #i (i = {2, 3, 4}), by using reported $W_{2,i}$, by using the following equation.

$$\begin{bmatrix} W_{l,1} \\ W'_{l,2} \\ W'_{l,3} \\ W'_{l,4} \end{bmatrix} = \begin{bmatrix} W_{l,1} \\ W_{2,2} W_{l,2} \\ W_{2,3} W_{l,3} \\ W_{2,4} W_{l,4} \end{bmatrix} \qquad (a\text{-}3)$$

<<Report 2»

Matrix $W_2$ for the inter-TRP CSI/PMI may be communicated together with $W \sim_k W_{f,k}^H$, or may be communicated in $W \sim_k W_{f,k}^H$. The inter-TRP CSI/PMI $w_2$ may follow at least one of Reports 2a to 2b below.

{Report 2a}

For measurement of the second/third/fourth CJT CSI, FD bases and coefficients may be measured together with the first CJT CSI, based on common configured/indicated $M_v$ from common $M_v$ (common FD base $W_{f,k}$) over a plurality of TRPs, and coefficients $W\~_k$ for these TRPs may be collectively selected and reported in CSI per TRP. The coefficient report may follow at least one of Reports 2a-1 to 2a-2 below.

{{Report 2a-1}}

In a coefficient report per TRP, an existing report may be reused. In other words, one strongest coefficient indicator (SCI) per layer and per TRP may be reported. The report may include, as a reference coefficient, amplitude = 1 and phase = 0. Another coefficient per layer and per TRP may be quantized based on the reference coefficient. An amplitude/phase difference between the strongest reference coefficient from the second/third/fourth TRP and the strongest reference coefficient from the first TRP may be added and reported.

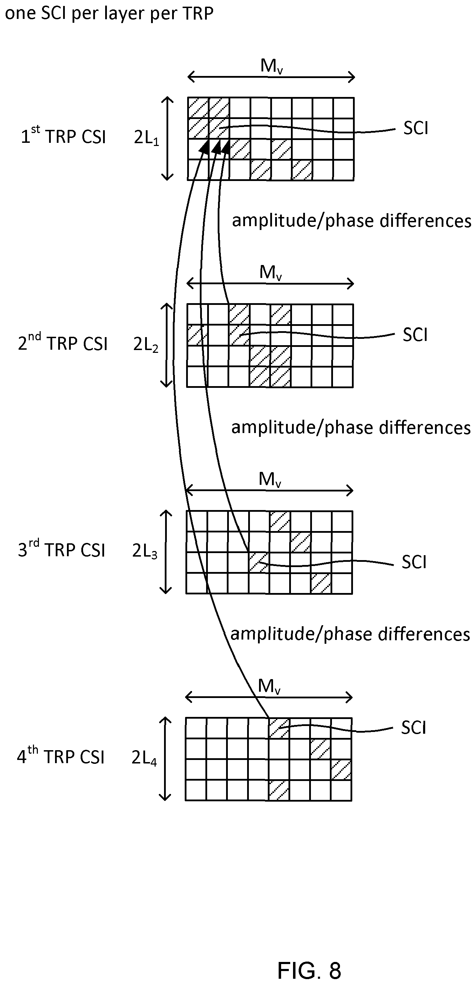

In an example in FIG. 8, reporting of one SCI per layer and per TRP and quantization per TRP may be performed, and an amplitude/phase difference between a reference coefficient from the first TRP and a reference coefficient from another TRP may be added and reported. In this example, amplitude/phase of an SCI beam per TRP is not reported, but an amplitude/phase difference between a reference coefficient from the first TRP and a reference coefficient from another TRP is reported.

{{Report 2a-2}}

For a coefficient report over a plurality of (all the) TRPs, one strongest coefficient indicator (SCI) for each of layers from all the TRPs may be reported in the first TRP CSI, and another coefficient per layer and per TRP may be quantized based on this strongest coefficient. The strongest coefficient may include, as a reference coefficient, amplitude = 1 and phase = 0. Another coefficient per layer and per TRP may be quantized based on the reference coefficient. Accordingly, an SCI report per TRP CSI may be absent in the second/third/fourth TRP CSI, and amplitude/phase of an original SCI may be quantized, and may be fed back based on a common SCI, as with another non-SCI beam. The original SCI per TRP may include, as a reference, amplitude = 1 and phase = 0. Accordingly, amplitude/phase of SCI per TRP may not be reported in Report 2a-1.

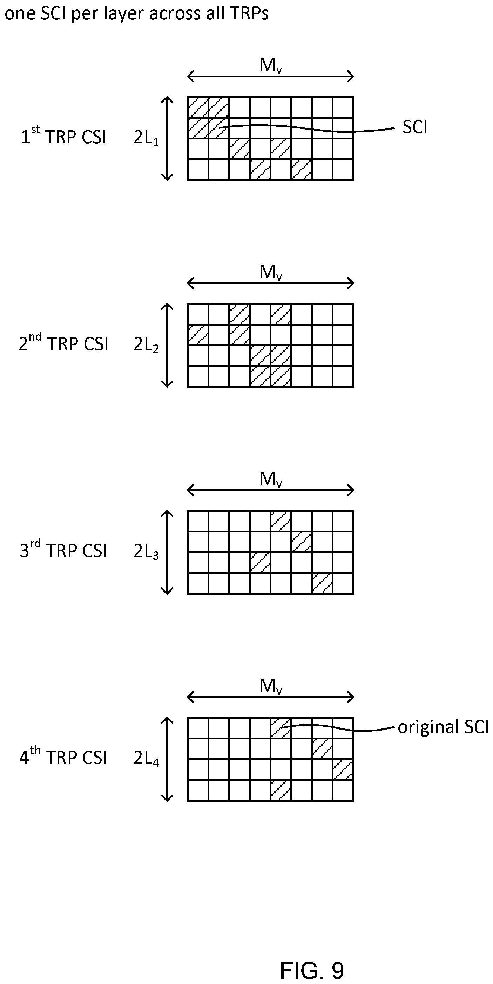

In an example in FIG. 9, reporting of one SCI per layer over all the TRPs and quantization over all the TRPs may be performed. In this example, the original SCI may not be reported in the second/third/fourth TRP CSI, but amplitude/phase of an original SCI beam per TRP may be reported.

{Report 2b}

For measurement of the second/third/fourth CJT CSI, FD bases and coefficients are measured together with the first CJT CSI, based on a configured larger FD base. For each TRP, a primary coefficient per TRP may be distributed in different FD bases. In this case, for each TRP, at least one of different $M_{v,i}$ sizes and different start offsets in FD bases may be reported. The report may be layer-specific for each TRP, or may be common to a plurality of layers for each TRP. The coefficient report may follow at least one of Reports 2b-1 to 2b-2 below.

{{Report 2b-1}}

In a coefficient report per TRP, an existing report may be reused. In other words, one strongest coefficient indicator (SCI) per $M_{v,i}$, per layer, and per TRP may be reported. The report may include, as a reference coefficient, amplitude = 1 and phase = 0. Another coefficient per $M_{v,i}$, per layer, and per TRP may be quantized based on the reference coefficient. An amplitude/phase difference between the strongest reference coefficient from the second/third/fourth TRP and the strongest reference coefficient from the first TRP may be added and reported.

Reporting of one SCI per $M_{v,i}$, per layer, and per TRP and quantization per TRP may be performed.

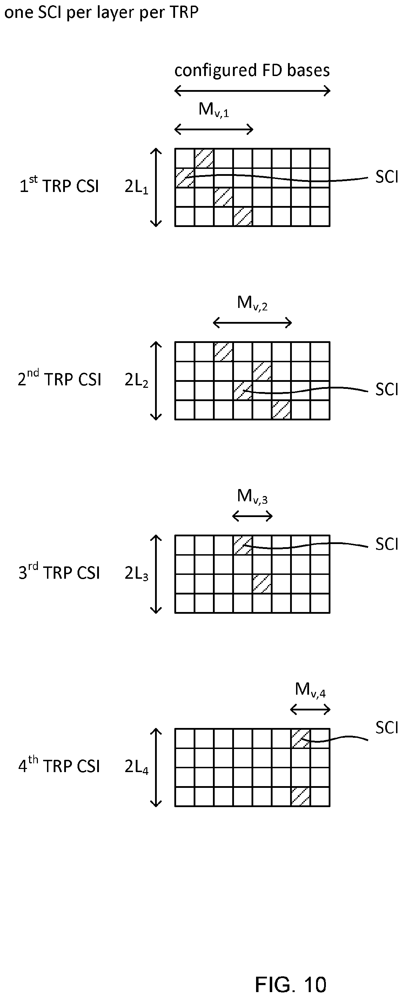

In an example in FIG. 10, for TRP #i (i = {1, 2, 3, 4}), $M_{v,i}$ less than or equal to the number of configured FD bases (FD base vector size) may be configured. The UE may determine start offset of a selected number of FD bases. $W_{f,k}$, $W\~_k$ may be determined by using $M_{v,i}$ FD bases based on the start offset, from among the configured FD bases. For TRP #i, number $L_i$ of SD beams (SD DFT vectors) may be configured. For each TRP, SCI may be selected/reported based on a selected FD base and a configured SD beam.

{{Report 2b-2}}

For a coefficient report over a plurality of (all the) TRPs, one strongest coefficient indicator (SCI) over all $M_{v,i}$ for each of layers from all the TRPs may be reported in the first TRP CSI, and another coefficient per layer and per TRP may be quantized based on this strongest coefficient. The strongest coefficient may include, as a reference coefficient, amplitude = 1 and phase = 0. Another coefficient per layer and per TRP may be quantized based on the reference coefficient. Accordingly, an SCI report per TRP CSI may be absent in the second/third/fourth TRP CSI, and amplitude/phase of an original SCI may be quantized, and may be fed back based on a common SCI, as with another non-SCI beam. The coefficient report per TRP and the coefficient report over the plurality of TRPs except for TRP-specific determination and report of $M_v$ may be similar to Report 2a-1/2a-2.

Reporting of one SCI over all $M_{v,i}$, per layer, and per TRP and quantization over all $M_{v,i}$, per layer, and per TRP may be performed.

An $M_v$ size for each TRP may follow at least one of Size Determination Methods 1 and 2 below.

{Size Determination Method 1}

An $M_v$ size for each TRP (or common to all the TRPs) may be configured by RRC. The UE may determine, for each TRP, start offset for $M_v$.

{Size Determination Method 2}

A maximum size of $M_v$ for each TRP may be defined in a specification, or may be configured by RRC. The UE may determine an $M_v$ size for each TRP, based on implementation (for example, in consideration of distribution of satisfactory coefficients).

<<Variation>>

$M_{v,i}$ may be discontinuous. Accordingly, notification of discontinuous $M_{v,i}$ may require reporting of an index of an FD base for each $M_{v,i}$.

In Report 2, an inter-TRP PMI may be communicated together with $W\sim_k W_{f,k}^H$, or may be communicated in $W\sim_k W_{f,k}^H$. The inter-TRP CSI in at least one of Embodiments #A1 to #A6 may be applied to the inter-TRP PMI.

Report 2b can reduce feedback overhead by using smaller TRP-specific $M_v$, as compared with that of Report 2a.

The UE may support both of Report 2a ($M_v$ common to a plurality of TRPs) and Report 2b (TRP-specific $M_v$). Switching between Report 2a and Report 2b may be performed based on the number of FD bases / subbands and the like.

According to this embodiment, the UE can appropriately report inter-TRP CSI/PMI.

<Embodiment #A1>

This embodiment relates to a CMR.

When a new parameter indicating a codebook type is configured (for example, codebookType=TypeII-CJT-r18 or TypeII-PortSelection-CJT-r18), new CJT CSI feedback based on existing type 2 / type 2 port selection may be configured. A new UE capability for each new codebook type for CJT may be defined.

CMR configuration/indication may follow any one of Options 1-1 to 1-3 below.

<<Option 1-1>>

The number of TRPs (number of CJT CSI) may be explicitly configured as X, or may be implicitly indicated via the number of target resources (CMRs (CSI-RS resources) / CMR groups / CSI-RS resource sets) in a CSI report configuration (CSI-ReportConfig). A new UE capability for X may be defined. For example, X is an integer, and may be up to 4, may be 2, 3, 4, or may be greater than 4.

In CSI-ReportConfig for CJT CSI feedback, up to X target resources (CMRs (CSI-RS resources) / CMR groups / CSI-RS resource sets) may be configured for the first resource setting for channel measurement. Each of target resources (CMR (CSI-RS resource) / CMR group / CSI-RS resource set) may correspond to one TRP.

It is preferable that X CSI-RS resources are used. X CMR groups / CSI-RS resource sets require an additional bitmap for indicating a combination of CMRs from the X CMR groups / CSI-RS resource sets.

One CMR from X CMRs may be measured and reported as reference CSI by a UE. For example, the first CRI/CSI in mapping order may be regarded as the reference CSI. Another CMR may be measured in consideration of an inter-TRP difference based on the reference CSI.

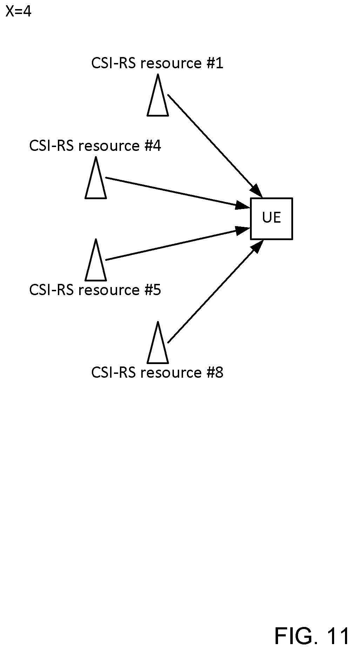

In an example in FIG. 11, X = 4. Four CMRs (CSI-RS resources #1, #4, #5, and #8) are configured for four respective TRPs.

{Variation}

Up to N*X CMRs may be configured for consideration of selection of different X-TRPs (X TRPs). Here, X CMRs may correspond to X respective TRPs for CJT CSI. N combinations of X-TRPs may be measured and selected by the UE for CJT CSI. A new UE capability for N may be defined. For example, N may be 1 or 2.

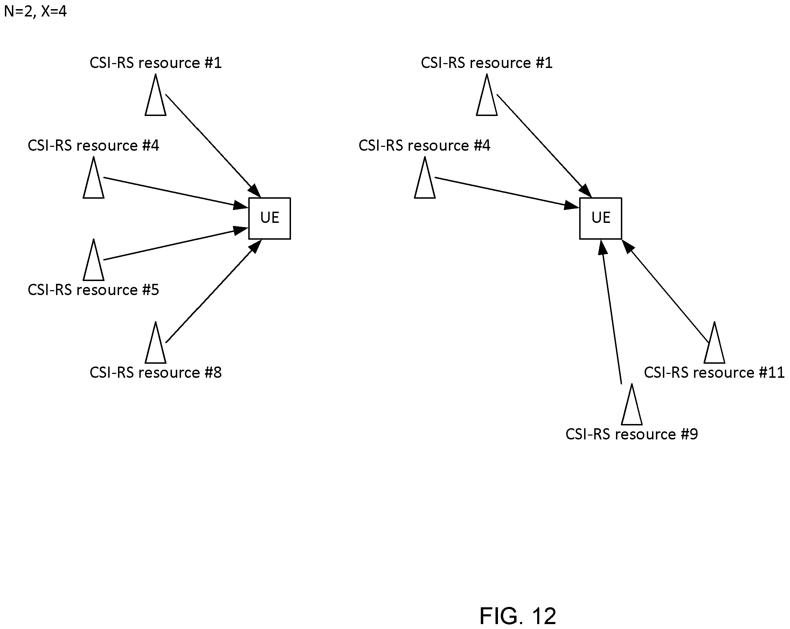

In an example in FIG. 12, N = 2, X = 4. A combination of four CMRs (CSI-RS resources #1, #4, #5, and #8) and another combination of four CMRs (CSI-RS resources #1, #4, #9, and #11) are configured.

<<Option 1-2>>

Up to X CSI report configurations (CSI-ReportConfig) may be configured for and associated with CJT CSI. Here, each piece of CSI-ReportConfig may correspond to one TRP. For each piece of CSI-ReportConfig, up to N CMRs may be configured. For example, N may be 1 or may be 2 or greater.

CMR configuration/indication may follow one of Options 1-2-1 and 1-2-2 below.

{Option 1-2-1}

One of the X CSI-ReportConfig may be configured as a reference CSI-ReportConfig, and other X-1 CSI-ReportConfigs may be associated with the reference CSI-ReportConfig.

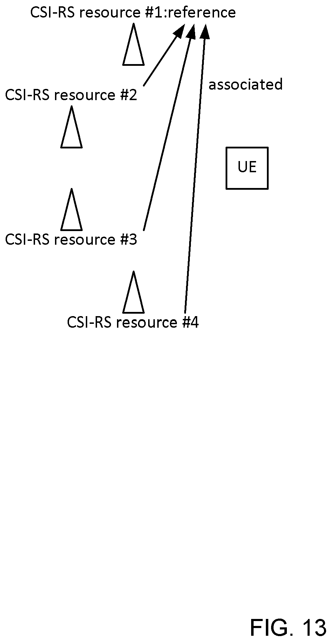

In an example in FIG. 13, four CSI-ReportConfig (#1, #2, #3, #4) are configured for four respective TRPs. CSI-ReportConfig #1 is configured as reference CSI-ReportConfig, and CSI-ReportConfig #2, #3 and #4 are associated with CSI-ReportConfig #1.

{Option 1-2-2}

One CMR may be selected from one piece of CSI-ReportConfig from the X CSI-ReportConfig, and CSI based on the CMR may be reported as reference CSI. Another CMR from other CSI-ReportConfig may be measured in consideration of an inter-TRP difference based on the reference CSI. Only one CMR can be configured for CJT CSI in each piece of CSI-ReportConfig, and a 1-bit indicator for the reference CSI may be reported for each piece of CSI-ReportConfig. The 1-bit indicator may indicate whether corresponding CSI is the reference CSI.

In Option 1-1 above, one piece of CSI-ReportConfig may be associated with a plurality of TRPs. One CSI-RS (CSI-RS resource / CMR) may be associated with one TRP. In Option 1-2 above, one piece of CSI-ReportConfig may be associated with one TRP.

<<Option 1-3>>

In a CSI report configuration (CSI-ReportConfig) for CJT CSI feedback, one or more N-port CSI-RS resources may be configured for CJT CSI measurement. Here, one or more ports from N ports may correspond to one TRP. Some of the N ports may correspond to one TRP, and the others may correspond to another TRP. N may be greater than or equal to X (N ≥ X).

For example, if one N-port CSI-RS resource is configured, the UE may measure all of the N ports, and may report one piece of CSI. For example, the UE may assume that the respective ports are transmitted by a plurality of TRPs, and may measure all of the N ports. In this case, enhancement of the CSI is unnecessary (TRPs are not recognized by the UE (transparent)), but the CSI-RS resource is transmitted not by one TRP, but by a plurality of TRPs, and thus a new QCL type for the CSI-RS resource may be required.

According to this embodiment, the UE can be appropriately configured with a CMR for CJT CSI feedback.

<Embodiment #A2>

This embodiment relates to an IMR.

For CJT, it may be assumed that inter-TRP interference is absent. Only interference by any TRP other than X TRPs (interference from any TRP other than the X TRPs) may be present.

In a CSI report configuration (CSI-ReportConfig) for CJT CSI feedback, the same IMR (ZP CSI-RS resource) may be configured for CMRs from the X TRPs. Based on the IMR, interference by any TRP other than the X TRPs may be measured.

IMR configuration/indication may follow one of Options 2-A and 2-B below.

{Option 2-A}

Only one IMR may be configured for X CMRs in the second resource setting. A UE may assume that the only one IMR is applied to all the CMRs.

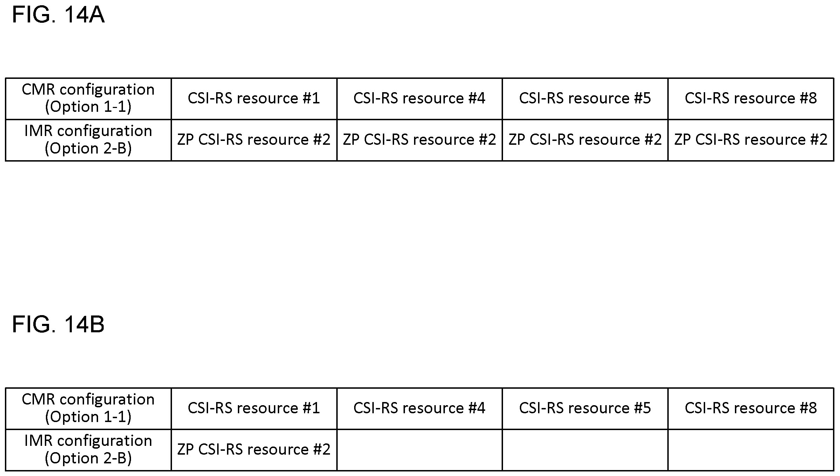

In an example in FIG. 14A, in accordance with Option 1-1 above, four CMRs (CSI-RS resources #1, #4, #5, and #8) are configured in CSI-ReportConfig. Furthermore, in the CSI-ReportConfig, one IMR (ZP CSI-RS resource #2) is configured in the second resource setting for one CMR. The UE applies the one IMR to four CMRs.

{Option 2-B}

A one-to-one CMR-IMR mapping configuration framework is maintained, but the same IMR resource may be configured for each CMR in the second resource setting. The UE may assume that the same IMR resource is configured for each CMR in the second resource setting. The IMR resource may correspond to CMRs in the first resource setting.

In an example in FIG. 14B, in accordance with Option 1-1 above, four CMRs (CSI-RS resources #1, #4, #5, and #8) are configured in CSI-ReportConfig. Furthermore, in the CSI-ReportConfig, the same IMR (ZP CSI-RS resource #2) is configured in the second resource setting for each CMR. The UE applies a corresponding IMR to each CMR.

According to this embodiment, the UE can be appropriately configured with an IMR for CJT CSI feedback.

<Embodiment #A3>

This embodiment relates to a codebook/CSI.

In Option 1-1 above, when CMRs for X TRPs are configured in one piece of CSI-ReportConfig, CSI in one CSI report may follow any one of Options 3-A to 3-D below.

<<Option 3-A>>

The CSI report may include at least one piece of CJT CSI below.

The number of CJT CSI may be less than 4, or may be greater than 5.

- The first CJT CSI may include existing single-TRP CSI and CRI for the first TRP / CMR / CSI-RS resource / CMR group / CSI-RS resource set.
- The second CJT CSI may include existing single-TRP CSI and CRI for the second TRP / CMR / CSI-RS resource / CMR group / CSI-RS resource set, and may include at least one index of an inter-TRP phasing index from an inter-TRP phasing matrix, an inter-TRP amplitude index from an inter-TRP amplitude matrix, and a single inter-TRP coefficient index from an inter-TRP coefficient matrix. The index may be an index based on comparison between the first CJT CSI and the second CJT CSI.
- The third CJT CSI may include existing single-TRP CSI and CRI for the third TRP / CMR / CSI-RS resource / CMR group / CSI-RS resource set, and may include at least one index of an inter-TRP phasing index from an inter-TRP phasing matrix, an inter-TRP amplitude index from an inter-TRP amplitude matrix, and a single inter-TRP coefficient index from an inter-TRP coefficient matrix. The index may be an index based on comparison between the first CJT CSI and the third CJT CSI.
- The fourth CJT CSI may include existing single-TRP CSI and CRI for the fourth TRP / CMR / CSI-RS resource / CMR group / CSI-RS resource set, and may include at least one index of an inter-TRP phasing index from an inter-TRP phasing matrix, an inter-TRP amplitude index from an inter-TRP amplitude matrix, and a single inter-TRP coefficient index from an inter-TRP coefficient matrix. The index may be an index based on comparison between the first CJT CSI and the fourth CJT CSI.

The $i$ th ($i \geq 2$) CJT CSI may include an index based on comparison between the first CJT CSI and the $i$ th CJT CSI.

A CRI index for the first CJT CSI may be selected by the UE from X CMRs, and may be reported by using a bit size of $\log 2(X)$. The CRI index may be reference CSI with the best channel condition.

With this CSI, a base station can update, for dynamic scheduling, CJT CSI for 2-TRP, 3-TRP, and 4-TRP with a reference TRP.

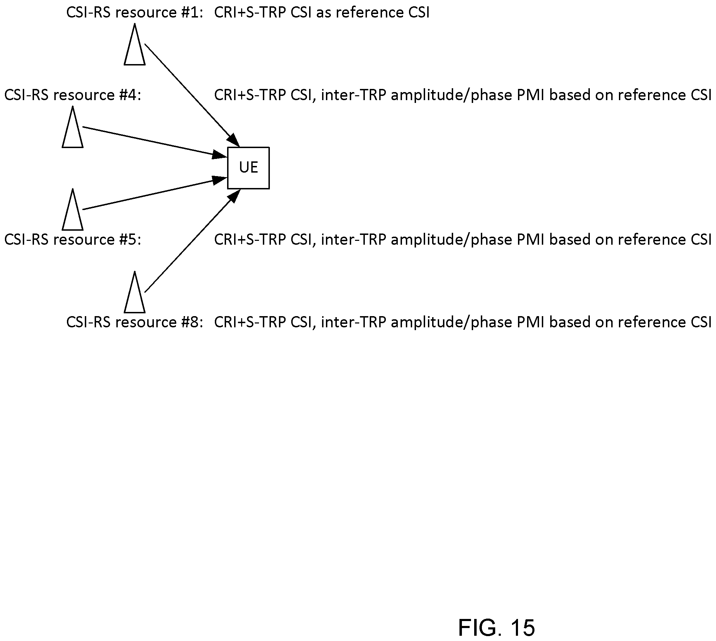

In an example in FIG. 15, in accordance with Option 1-1 above, four CMRs (CSI-RS resources #1, #4, #5, and #8) are configured in CSI-ReportConfig. The CSI report includes the first to fourth CJT CSI. The first CJT CSI includes a CRI and single-TRP CSI as reference CSI based on CSI-RS resource #1. The second CJT CSI includes a CRI and single-TRP CSI based on CSI-RS resource #4, and an index of inter-TRP amplitude/phasing based on the reference CSI (single-TRP CSI for CSI-RS resource #1). The third CJT CSI includes a CRI and single-TRP CSI based on CSI-RS resource #5, and an index of inter-TRP amplitude/phasing based on the reference CSI (single-TRP CSI for CSI-RS resource #1). The fourth CJT CSI includes a CRI and single-TRP CSI based on CSI-RS resource #8, and an index of inter-TRP amplitude/phasing based on the reference CSI (single-TRP CSI for CSI-RS resource #1).

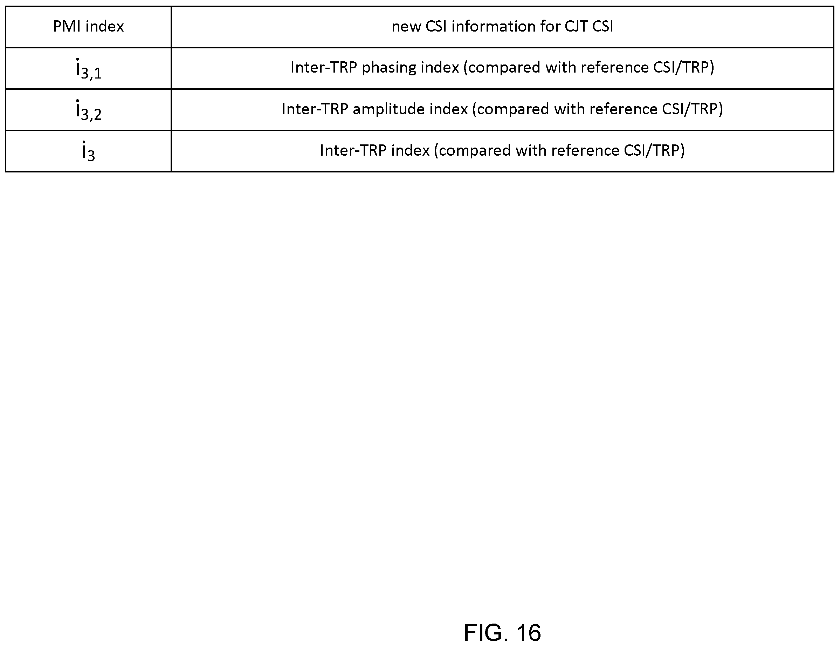

FIG. 16 shows an example of a new codebook for at least one of the inter-TRP phasing index, the inter-TRP amplitude index, and the inter-TRP coefficient index (including both amplitude and phase). PMI index $i_{3,1}$ indicates, as new CSI information for CJT CSI, an inter-TRP phasing index (compared with the reference CSI/TRP). PMI index $i_{3,2}$ indicates, as new CSI information for CJT CSI, an inter-TRP amplitude index (compared with the reference CSI/TRP). PMI index $i_3$ indicates, as new CSI information for CJT CSI, an inter-TRP coefficient index (compared with the reference CSI/TRP).

<<Option 3-B>>

The CSI report may include at least one piece of CJT CSI below. The number of CJT CSI may be less than 4, or may be greater than 5.

- The first CJT CSI may include existing single-TRP CSI and CRI for the first TRP / CMR / CSI-RS resource / CMR group / CSI-RS resource set.
- The second CJT CSI may include existing single-TRP CSI and CRI for the second TRP / CMR / CSI-RS resource / CMR group / CSI-RS resource set, and may include at least one index of an inter-TRP phasing index from an inter-TRP phasing matrix, an inter-TRP amplitude index from an inter-TRP amplitude matrix, and a single inter-TRP coefficient index from an inter-TRP coefficient matrix. The index may be an index based on comparison between the first CJT CSI and the second CJT CSI.
- The third CJT CSI may include existing single-TRP CSI and CRI for the third TRP / CMR / CSI-RS resource / CMR group / CSI-RS resource set, and may include at least one index of an inter-TRP phasing index from an inter-TRP phasing matrix, an inter-TRP amplitude index from an inter-TRP amplitude matrix, and a single inter-TRP coefficient index from an inter-TRP coefficient matrix. The index may be at least one of an index based on comparison between the first CJT CSI and the third CJT CSI and an index based on comparison between the second CJT CSI and the third CJT CSI.
- The fourth CJT CSI may include existing single-TRP CSI and CRI for the fourth TRP / CMR / CSI-RS resource / CMR group / CSI-RS resource set, and may include at least one index of an inter-TRP phasing index from an inter-TRP phasing matrix, an inter-TRP amplitude index from an inter-TRP amplitude matrix, and a single inter-TRP coefficient index from an inter-TRP coefficient matrix. The index may be at least one of an index based on comparison between the first CJT CSI and the fourth CJT CSI, an index based on comparison between the second CJT CSI and the fourth CJT CSI, and an index based on comparison between the third CJT CSI and the fourth CJT CSI.

The i th ($i \geq 2$) CJT CSI may include an index based on comparison between the first to i-1 th CJT CSI and the i th CJT CSI.

A CRI index for the first CJT CSI may be selected by the UE from X CMRs, and may be reported by using a bit size of log2(X). The CRI index may be reference CSI with the best channel condition. A CRI index for the second CJT CSI may be the second best CSI. A CRI index for the third CJT CSI may be the third best CSI. A CRI index for the fourth CJT CSI may be the fourth best CSI.

As compared to Option 3-A, in Option 3-B, the base station can update, for dynamic scheduling, arbitrary CJT CSI for 2-TRP, 3-TRP, and 4-TRP with a reference TRP.

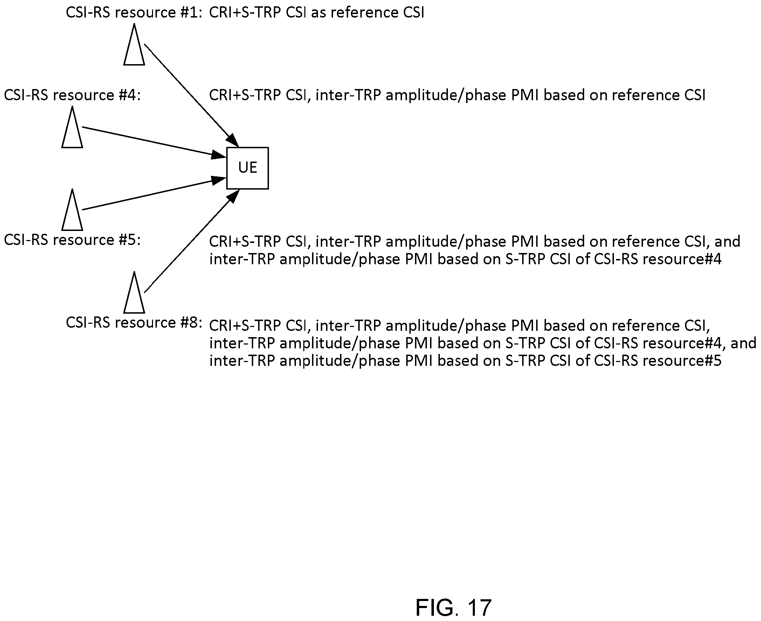

In an example in FIG. 17, in accordance with Option 1-1 above, four CMRs (CSI-RS resources #1, #4, #5, and #8) are configured in CSI-ReportConfig. The CSI report includes the first to fourth CJT CSI. The first CJT CSI includes a CRI and single-TRP CSI as reference CSI based on CSI-RS resource #1. The second CJT CSI includes a CRI and single-TRP CSI based on CSI-RS resource #4, and an index of inter-TRP amplitude/phasing based on the reference CSI (single-TRP CSI for CSI-RS resource #1). The third CJT CSI includes a CRI and single-TRP CSI based on CSI-RS resource #5, an inter-TRP amplitude/phasing index based on the reference CSI (single-TRP CSI for CSI-RS resource #1), and an index of inter-TRP amplitude/phasing based on the single-TRP CSI for CSI-RS resource #4. The fourth CJT CSI includes a CRI and single-TRP CSI based on CSI-RS resource #8, an inter-TRP amplitude/phasing index based on the reference CSI (single-TRP CSI for CSI-RS resource #1), an inter-TRP amplitude/phasing index based on the single-TRP CSI for CSI-RS resource #4, and an index of inter-TRP amplitude/phasing based on the single-TRP CSI for CSI-RS resource #5.

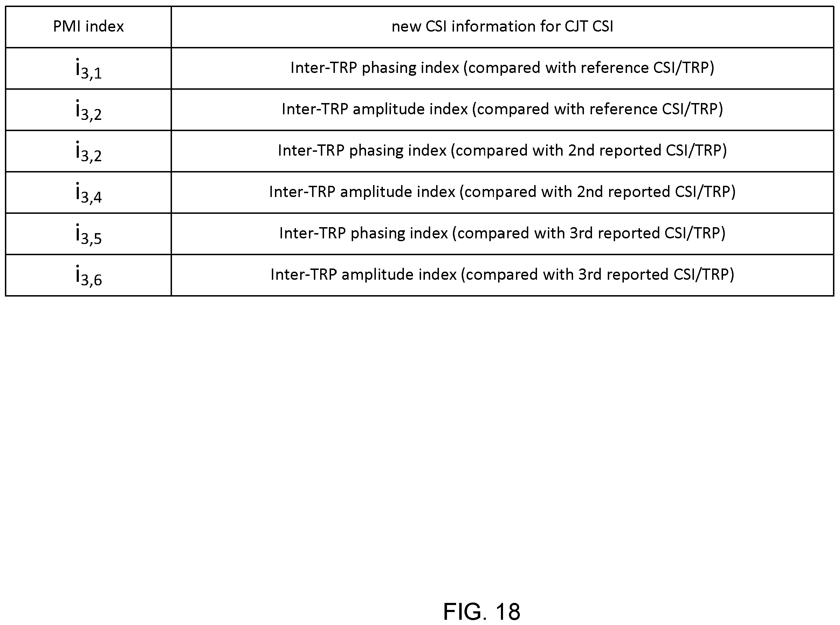

FIG. 18 shows an example of a new codebook for at least one of the inter-TRP phasing index, the inter-TRP amplitude index, and the inter-TRP coefficient index (including both amplitude and phase). PMI index $i_{3,1}$ indicates, as new CSI information for CJT CSI, an inter-TRP phasing index (compared with the reference CSI/TRP). PMI index $i_{3,2}$ indicates, as new CSI information for CJT CSI, an inter-TRP amplitude index (compared with the reference CSI/TRP). PMI index $i_{3,3}$ indicates, as new CSI information for CJT CSI, an inter-TRP phasing index (compared with the second CSI/TRP to be reported). PMI index $i_{3,4}$ indicates, as new CSI information for CJT CSI, an inter-TRP amplitude index (compared with the second CSI/TRP to be reported). PMI index $i_{3,5}$ indicates, as new CSI information for CJT CSI, an inter-TRP phasing index (compared with the third CSI/TRP to be reported). PMI index $i_{3,6}$ indicates, as new CSI information for CJT CSI, an inter-TRP amplitude index (compared with the third CSI/TRP to be reported).

<<Option 3-C>>

Based on Option 3-A/3-B above, at least one of the following additional contents may be reported for contents of the second/third/fourth CJT. The number of CJT CSI may be less than 4, or may be greater than 5.

- The second CJT CSI may further include a CQI (2-TRP CQI) assuming 2-TRP CJT with a CRI in the first CJT CSI and a CRI in the second CJT CSI (CMR for the first CJT CSI and CMR for the second CJT CSI).
- The third CJT CSI may further include at least one of a CQI assuming 2-TRP CJT with a CRI in the first CJT CSI and a CRI in the third CJT CSI (CMR for the first CJT CSI and CMR for the third CJT CSI), and a CQI (3-TRP CQI) assuming 3-TRP CJT with a CRI in the first CJT CSI, a CRI in the second CJT CSI, and a CRI in the third CJT CSI (CMR for the first CJT CSI, CMR for the second CJT CSI, and CMR for the third CJT CSI).
- The fourth CJT CSI may further include at least one of a CQI assuming 2-TRP CJT with a CRI in the first CJT CSI and a CRI in the fourth CJT CSI (CMR for the first CJT CSI, CMR for the fourth CJT CSI, and CMR for the second CJT CSI), and a CQI (4-TRP CQI) assuming 4-TRP CJT with a CRI in the first CJT CSI, a CRI in the second CJT CSI, a CRI in the third CJT CSI, and a CRI in the fourth CJT CSI (CMR for the first CJT CSI, CMR for the second CJT CSI, CMR for the third CJT CSI, and CMR for the fourth CJT CSI).

The i th (i ≥ 2) CJT CSI may include a CQI assuming the first to i th i-TRP CJT.
A new CQI (X-TRP CQI) report for at least one of 2-TRP CJT (with one TRP as reference TRP/CSI), 3-TRP CJT (with one TRP as reference TRP/CSI), and 4-TRP CJT (with one TRP as reference TRP/CSI) may be defined.
Whether a new X-TRP CQI is reported in X-TRP CJT CSI may be configured in an RRC IE (CSI-ReportConfig).

{Variation}

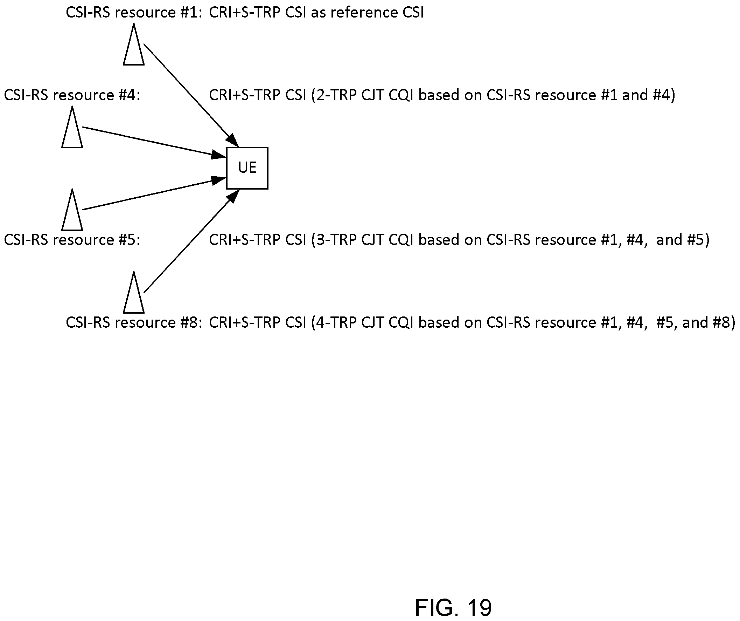

The additional new X-TRP CQI may not be reported, and, alternatively, an existing single-TRP CQI may be reported in each piece of CJT CSI. X-TRP CJT may be CJT including CMRs/TRPs reported in the first to i th CJT CSI. For example, 4-TRP CJT may be CJT including CMRs/TRPs reported in the first to i th CJT CSI.
In an example in FIG. 19, in accordance with Option 1-1 above, four CMRs (CSI-RS resources #1, #4, #5, and #8) are configured in CSI-ReportConfig. The CSI report includes the first to fourth CJT CSI. The first CJT CSI includes a CRI and single-TRP CSI as reference CSI based on CSI-RS resource #1. The second CJT CSI may include a CRI and single-TRP CSI based on CSI-RS resource #4, and, for the second CJT CSI, the single-TRP CQI may be replaced with a 2-TRP CQI (based on CSI-RS resources #1 and #4). The third CJT CSI may include a CRI and single-TRP CSI based on CSI-RS resource #5, and, for the third CJT CSI, the single-TRP CQI may be replaced with a 3-TRP CQI (based on CSI-RS resources #1, #4, and #5). The fourth CJT CSI may include a CRI and single-TRP CSI based on CSI-RS resource #8, and, for the fourth CJT CSI, the single-TRP CQI may be replaced with a 4-TRP CQI (based on CSI-RS resources #1, #4, #5, and #8).

<<Option 3-D>>

Based on Option 3-A/3-B above, at least one of the following additional contents may be reported for contents of the second/third/fourth CJT. The number of CJT CSI may be less than 4, or may be greater than 5. The i th CJT CSI may be based on the first to i-1 th CJT CSI, as with the first to i-1 th CJT CSI.

- The second CJT CSI may further include a CQI (2-TRP CQI) assuming 2-TRP CJT with a CRI in the first CJT CSI and a CRI in the second CJT CSI (CMR for the first CJT CSI and CMR for the second CJT CSI).
- The third CJT CSI may further include at least one of a CQI assuming 2-TRP CJT with a CRI in the first CJT CSI and a CRI in the third CJT CSI (CMR for the first CJT CSI and CMR for the third CJT CSI), a CQI assuming 2-TRP CJT with a CRI in the second CJT CSI and a CRI in the third CJT CSI (CMR for the second CJT CSI and CMR for the third CJT CSI), and a CQI (3-TRP CQI) assuming 3-TRP CJT with a CRI in the first CJT CSI, a CRI in the second CJT CSI, and a CRI in the third CJT CSI (CMR for the first CJT CSI, CMR for the second CJT CSI, and CMR for the third CJT CSI).
- The fourth CJT CSI may further include at least one of a CQI assuming 2-TRP CJT with a CRI in the first CJT CSI and a CRI in the fourth CJT CSI (CMR for the first CJT CSI, CMR for the fourth CJT CSI, and CMR for the second CJT CSI), a CQI assuming 2-TRP CJT with a CRI in the second CJT CSI and a CRI in the fourth CJT CSI (CMR for the second CJT CSI, CMR for the fourth CJT CSI, and CMR for the second CJT CSI), a CQI assuming 2-TRP CJT with a CRI in the third CJT CSI and a CRI in the fourth CJT CSI (CMR for the third CJT CSI, CMR for the fourth CJT CSI, and CMR for the second CJT CSI), a CQI assuming 3-TRP CJT with a CRI in the first CJT CSI, a CRI in the second CJT CSI, and a CRI in the fourth CJT CSI (CMR for the first CJT CSI, CMR for the second CJT CSI, and CMR for the fourth CJT CSI), a CQI assuming 3-TRP CJT with a CRI in the first CJT CSI, a CRI in the third CJT CSI, and a CRI in the fourth CJT CSI (CMR for the first CJT CSI, CMR for the third CJT CSI, and CMR for the fourth CJT CSI), a CQI assuming 3-TRP CJT with a CRI in the second CJT CSI, a CRI in the third CJT CSI, and a CRI in the fourth CJT CSI (CMR for the second CJT CSI, CMR for the third CJT CSI, and CMR for the fourth CJT CSI), and a CQI (4-TRP CQI) assuming 4-TRP CJT with a CRI in the first CJT CSI, a CRI in the second CJT CSI, a CRI in the third CJT CSI, and a CRI in the fourth CJT CSI (CMR for the first CJT CSI, CMR for the second CJT CSI, CMR for the third CJT CSI, and CMR for the fourth CJT CSI).

The i th (i ≥ 2) CJT CSI may include a CQI assuming j-TRP CJT (2 ≤ j ≤ i) using at least two of the first to i th CJT CSI.

A new CQI (X-TRP CQI) report for at least one of 2-TRP CJT (with/without indication of two TRPs), 3-TRP CJT (with/without indication of three TRPs), and 4-TRP CJT may be defined.

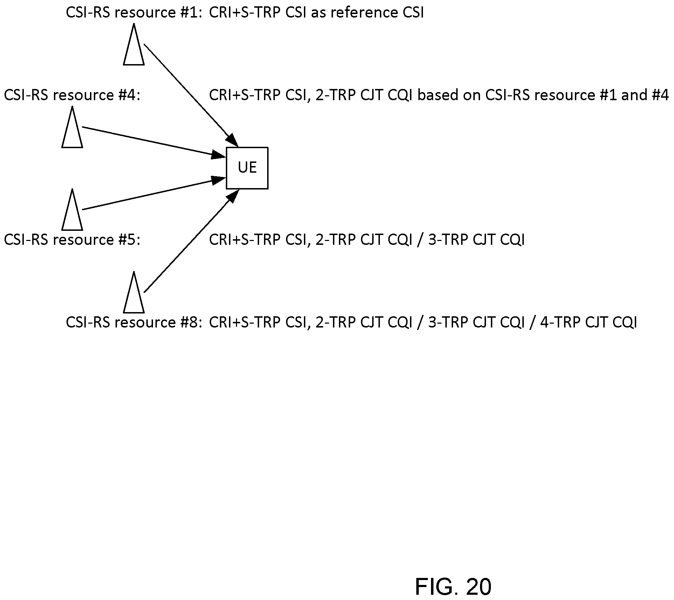

In an example in FIG. 20, in accordance with Option 1-1 above, four CMRs (CSI-RS resources #1, #4, #5, and #8) are configured in CSI-ReportConfig. The CSI report includes the first to fourth CJT CSI. The first CJT CSI includes a CRI and single-TRP CSI as reference CSI based on CSI-RS resource #1. The second CJT CSI includes a CRI and single-TRP CSI based on CSI-RS resource #4, and a 2-TRP CQI (based on CSI-RS resources #1 and #4). The third CJT CSI includes a CRI and single-TRP CSI based on CSI-RS resource #5, and a 2-TRP CQI / 3-TRP CQI. The fourth CJT CSI includes a CRI and single-TRP CSI based on CSI-RS resource #8, and a 2-TRP CQI / 3-TRP CQI / 4-TRP CQI.

Whether a new X-TRP CQI is reported in X-TRP CJT CSI may be configured in an RRC IE (CSI-ReportConfig).

In Option 1-2 above, for X associated CSI-ReportConfig, one CSI report may correspond to each piece of CSI-ReportConfig. In this case, Option 3-A/3-B/3-C/3-D may be applied with the following differences.

- Contents of the first/second/third/fourth CJT CSI in Option 3-A/3-B/3-C/3-D may be reported in separate CSI reports for corresponding CSI-ReportConfig. In this case, a CRI report may not be required in each CSI report.
- In each CSI report, a reference CSI indicator may be explicitly indicated together with new contents of one piece of CJT CSI. For a CSI report with reference CSI indicator = true/yes, contents of the first CJT CSI may be reported. For another CSI report with reference CSI indicator = falth/no, contents of the second/third/fourth CJT CSI may be reported.

According to this embodiment, the UE can appropriately report CJT CSI.

<Embodiment #A4>

This embodiment relates to a codebook/CSI/quantization.

A new codebook table (quantization table) for new reported contents in Embodiment #A3 may be defined.

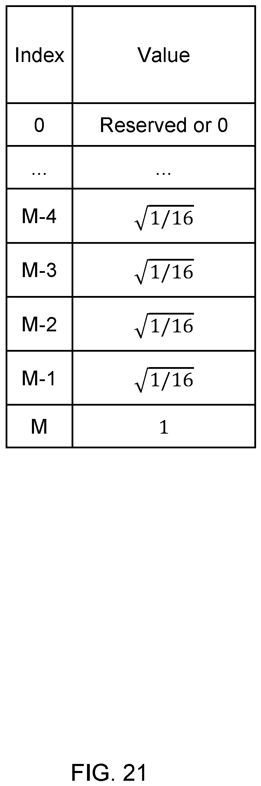

For an inter-TRP amplitude codebook, a new table may be defined or an existing table (for example, FIG. 1 / FIG. 2) may be reused. FIG. 21 shows an example of the new table for the inter-TRP amplitude codebook. For example, when M = 3, 2 bits are used for indication/reporting of the codebook, and four values can be indicated/reported. For example, when M = 4, 3 bits are used for indication/reporting of the codebook, and eight values can be indicated/reported.

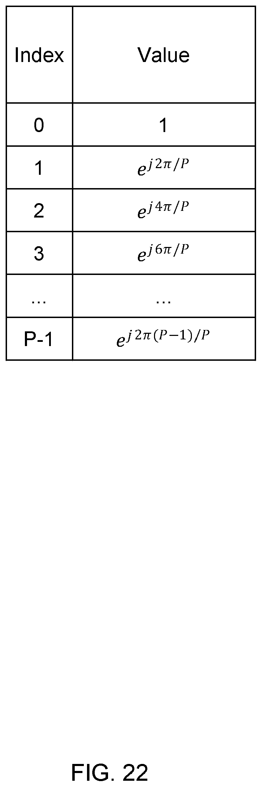

For an inter-TRP phasing codebook, a new table may be defined or an existing table (for example, FIG. 1 / FIG. 2) may be reused. FIG. 22 shows an example of the new table for the inter-TRP phasing codebook. For example, when P = 4, 2 bits are used for indication/reporting of the codebook, and four values can be indicated/reported. For example, when P = 8, 3 bits are used for indication/reporting of the codebook, and eight values can be indicated/reported. For phase indication/reporting, a range of [0, 2n) may be divided into P parts ($\varphi_{l,i} = \exp(j2\pi c_i/P)$, $c_i \in \{0, ..., P-1\}$).

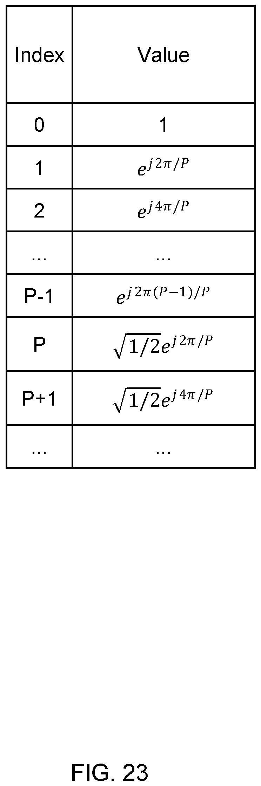

A new table may be defined for an inter-TRP coefficient codebook (inter-TRP codebook). FIG. 23 shows an example of the new table for the inter-TRP coefficient codebook. Each value may include both amplitude and phase.

According to this embodiment, the UE can appropriately quantize CJT CSI.

<Embodiment #A5>

This embodiment relates to CSI part 1/2 and mapping order.

In Option 1-1 above, classification of CSI part 1 and CSI part 2 may be defined for a new CJT CSI report for one TRP for one piece of CSI-ReportConfig.

An X-TRP CQI may be present in one of CSI part 1 and CSI part 2.

A new mapping order table of one or more CSI fields for one CSI report for CSI part 1 and a new mapping order table of one or more CSI fields for one CSI report for CSI part 2 may be defined. For example, a CRI may be present in the first part of part 1. An inter-TRP coefficient (phasing/amplitude) index may be present in the last part of part 2.

A mapping order of one or more CSI fields in CSI part 1 for CJT CSI for one TRP may follow the following.

- CRI (if reported)
- Reference CSI indicator (if reported)
- Rank indicator (RI)
- Channel quality indicator (CQI) (based on configuration, single TRP CQI or X-TRP CQI)
- Number of non-zero amplitude coefficients

This CSI part 1 may have a fixed payload size.

A mapping order of one or more CSI fields in CSI part 2 for CJT CSI for one TRP may follow the following.

- Oversampling factor
- Plurality of indices of 2D-DFT bases (SD vectors)
- Index $M_{initial}$ of initial DFT base (FD base) of selected DFT window
- Selected DFT base (FD base) per layer
- Bitmap per layer
- Non-zero LC coefficient (phase and amplitude) per layer
- Strongest (maximum strength) coefficient indicator per layer
- Amplitude of strongest coefficient per layer / per polarization
- Index of inter-TRP amplitude per layer (per polarization) (if reported)
- Index of inter-TRP phasing per layer (per polarization) (if reported)
- Index of inter-TRP coefficient per layer (per polarization) (if reported)
- Additional X-TRP CQI (if reported) (which may be present in CSI part 1)

Contents of the first/second/third/fourth CJT CSI may be present in one CSI report.

The CSI report may follow one of Options 5-1 and 5-2 below.

{Option 5-1}

CSI part 1 for each piece of the first/second/third/fourth CJT CSI may include contents of the above "one CSI part 1 for CJT CSI for one TRP." CSI part 2 for each piece of the first/second/third/fourth CJT CSI may include contents of the above "one CSI part 2 for CJT CSI for one TRP. "

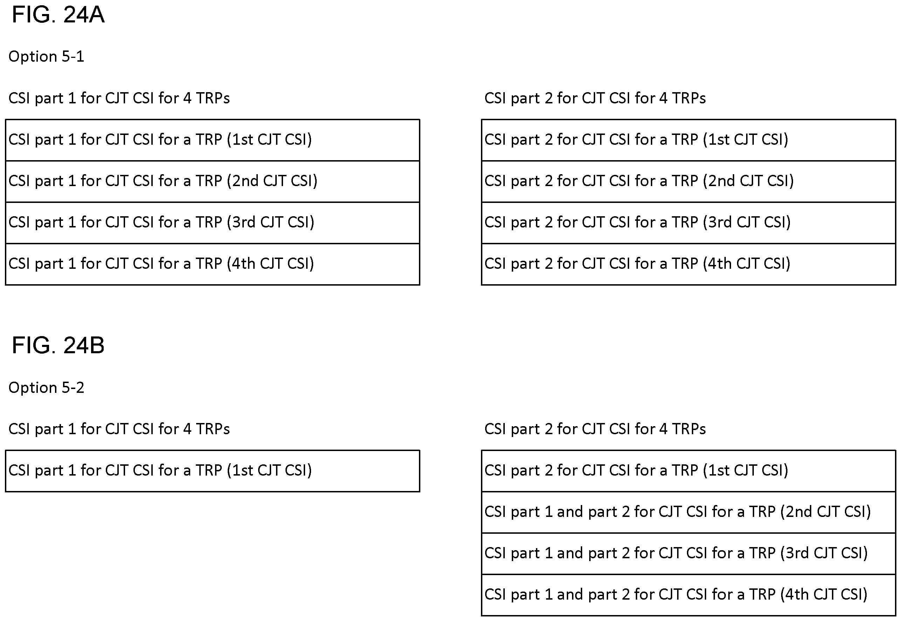

FIG. 24A shows an example of CSI parts 1 and 2 for 4-TRP CJT CSI. In accordance with the above "one CSI part 1 for CJT CSI for one TRP," CSI part 1 for the first TRP (CJT CSI), CSI part 1 for the second TRP (CJT CSI), CSI part 1 for the third TRP (CJT CSI), and CSI part 1 for the fourth TRP (CJT CSI) are reported. In accordance with the above "one CSI part 2 for CJT CSI for one TRP," CSI part 2 for the first TRP (CJT CSI), CSI part 2 for the second TRP (CJT CSI), CSI part 2 for the third TRP (CJT CSI), and CSI part 2 for the fourth TRP (CJT CSI) are reported.

{Option 5-2}

CSI part 1 may include contents of the above "one CSI part 1 for CJT CSI for one TRP" for reference (first) CJT CSI. CSI part 2 may include other contents.

FIG. 24B shows an example of CSI parts 1 and 2 for 4-TRP CJT CSI. In accordance with the above "one CSI part 1 for CJT CSI for one TRP," CSI part 1 for the first TRP (CJT CSI) is reported. In accordance with the above "one CSI part 2 for CJT CSI for one TRP," CSI part 2 for the first TRP (CJT CSI) is reported. In accordance with the above "one CSI part 1 for CJT CSI for one TRP" and "one CSI part 2 for CJT CSI for one TRP," CSI parts 1 and 2 for the second TRP (CJT CSI), CSI parts 1 and 2 for the third TRP (CJT CSI), and CSI parts 1 and 2 for the fourth TRP (CJT CSI) are reported.

In the new mapping order table of one or more CSI fields for one CSI report for CSI part 1/2, CSI may be disposed in order of TRPs (first CJT CSI, second CJT CSI, third CJT CSI, fourth CJT CSI).

According to this embodiment, the UE can appropriately report CJT CSI.

<Embodiment #A6>

This embodiment relates to CSI part 2.

For the above "one CSI part 2 for CJT CSI for one TRP," grouping of CSI parts 2 (based on group 0/1/2 above) may follow one of Options 6-1 and 6-2 below.

{Option 6-1}

A new index of an inter-TRP amplitude/phasing/coefficient may be disposed in group 2.

For example, group 2 above may be changed as follows.

- Group 2: lowest (lower) floor($K^{NZ}/2$) priority elements in $i_{1,7,l}$, lowest (lower) floor($K^{NZ}/2$) priority elements in $i_{2,4,l}$, lowest (lower) floor($K^{NZ}/2$) priority elements in $i_{2,5,l}$ (l = 1, ..., v), and index of inter-TRP amplitude/phasing/coefficient per layer

{Option 6-2}

New group 3 may be introduced. A new index of an inter-TRP amplitude/phasing/coefficient may be disposed in group 3. In CSI omission, group 3 may have a priority lower than that of group 2.

For example, in addition to groups 0 to 2 above, group 3 below may be defined.

- Group 3: index of inter-TRP amplitude/phasing/coefficient per layer

When an X-TRP CQI is present in CSI part 2, the X-TRP CQI may be disposed in group 0 or 1 having a higher priority.

In "CSI parts 1 and 2 for 4-TRP CJT CSI" in Option 5-2 above, contents of original CSI part 1 for the CJT CSI (second/third/fourth CJT CSI) for one TRP are present in CSI part 2. The contents of original CSI part 1 may be disposed in group 0 in CSI part 2.

If group 3 is introduced, a priority report level for CSI part 2 may be changed.

A relationship between a CSI part 2 priority and a mapping order table for CSI part 2 may follow the following. $N_{Rep}$ may be the number of CSI reports.

- Priority 0: group 0 CSI for CSI reports set to 'typeII-r16,' 'typeII-PortSelection-r16,' or 'xx-CJT-r18' for CSI reports 1 to $N_{Rep}$; part 2 wideband CSI for CSI reports set to another one
- Priority 1: group 1 CSI for CSI report 1 in case where CSI reports are set to 'typeII-r16,' 'typeII-PortSelection-r16,' or 'xx-CJT-r18'; part 2 subband CSI for even-numbered subbands for CSI report 1 in case where CSI reports are set to another one
- Priority 2: group 2 CSI for CSI report 1 in case where CSI reports are set to 'typeII-r16,' 'typeII-PortSelection-r16,' or 'xx-CJT-r18'; part 2 subband CSI for odd-numbered subbands for CSI report 1 in case where CSI reports are set to another one
- Priority 3: group 3 CSI for CSI report 1 in case where CSI reports are set to 'typeII-r16,' 'typeII-PortSelection-r16,' or 'xx-CJT-r18'; part 2 subband CSI for odd-numbered subbands for CSI report 1 in case where CSI reports are set to another one
- Priority 4: group 1 CSI for CSI report 2 in case where CSI reports are set to 'typeII-r16,' 'typeII-PortSelection-r16,' or 'xx-CJT-r18'; part 2 subband CSI for even-numbered subbands for CSI report 1 in case where CSI reports are set to another one
- Priority 5: group 2 CSI for CSI report 2 in case where CSI reports are set to 'typeII-r16,' 'typeII-PortSelection-r16,' or 'xx-CJT-r18'; part 2 subband CSI for odd-numbered subbands for CSI report 1 in case where CSI reports are set to another one
- Priority 6: group 3 CSI for CSI report 2 in case where CSI reports are set to 'typeII-r16,' 'typeII-PortSelection-r16,' or 'xx-CJT-r18'; part 2 subband CSI for odd-numbered subbands for CSI report 1 in case where CSI reports are set to another one
- Priority 7 and higher priorities may be defined in accordance with rules similar to those of Priorities 1 to 6.

In Priorities 1 to 3, mapping order of the CSI in groups 1 to 3 for CSI report 1 in a case where the CSI reports are set to 'xx-CJT-r18' may follow one of Mapping Orders 1 and 2 below.

{Mapping Order 1}

- Group 1 CSI for CSI report 1 for TRP with first CJT CSI
- Group 1 CSI for CSI report 1 for TRP with second CJT CSI
- Group 1 CSI for CSI report 1 for TRP with third CJT CSI
- Group 1 CSI for CSI report 1 for TRP with fourth CJT CSI
- Group 2 CSI for CSI report 1 for TRP with first CJT CSI
- Group 2 CSI for CSI report 1 for TRP with second CJT CSI

- Group 2 CSI for CSI report 1 for TRP with third CJT CSI
- Group 2 CSI for CSI report 1 for TRP with fourth CJT CSI
- Group 3 CSI for CSI report 1 for TRP with first CJT CSI
- Group 3 CSI for CSI report 1 for TRP with second CJT CSI
- Group 3 CSI for CSI report 1 for TRP with third CJT CSI
- Group 3 CSI for CSI report 1 for TRP with fourth CJT CSI

{Mapping Order 2}

- Group 1 CSI for CSI report 1 for TRP with first CJT CSI
- Group 2 CSI for CSI report 1 for TRP with first CJT CSI
- Group 3 CSI for CSI report 1 for TRP with first CJT CSI
- Group 1 CSI for CSI report 1 for TRP with second CJT CSI
- Group 2 CSI for CSI report 1 for TRP with second CJT CSI
- Group 3 CSI for CSI report 1 for TRP with second CJT CSI
- Group 1 CSI for CSI report 1 for TRP with third CJT CSI
- Group 2 CSI for CSI report 1 for TRP with third CJT CSI
- Group 3 CSI for CSI report 1 for TRP with third CJT CSI
- Group 1 CSI for CSI report 1 for TRP with fourth CJT CSI
- Group 2 CSI for CSI report 1 for TRP with fourth CJT CSI
- Group 3 CSI for CSI report 1 for TRP with fourth CJT CSI

According to this embodiment, the UE can appropriately report CJT CSI.

<Other Embodiments>

<<UE Capability Information / Higher Layer Parameter>>

A higher layer parameter (RRC IE) / UE capability corresponding to a function (characteristics, feature) in each of the respective embodiments above may be defined. The higher layer parameter may indicate whether the function is enabled. The UE capability may indicate whether the UE supports the function.

The UE configured with the higher layer parameter corresponding to the function may perform the function. "The UE not configured with the higher layer parameter corresponding to the function does not perform the function (for example, follows Rel. 15/16)" may be defined.

The UE that has reported/transmitted the UE capability indicating support of the function may perform the function. "The UE that has not reported the UE capability indicating support of the function does not perform the function (for example, follows Rel. 15/16)" may be defined.

When the UE reports/transmits the UE capability indicating support of the function and is configured with the higher layer parameter corresponding to the function, the UE may perform the function. "When the UE does not report/transmit the UE capability indicating support of the function or when the UE is not configured with the higher layer parameter corresponding to the function, the UE does not perform the function (for example, follows Rel. 15/16)" may be defined.

Which embodiment/option/choice/function in the plurality of embodiments above is to be used may be configured by a higher layer parameter, may be reported by a UE as a UE capability, may be defined in a specification, or may be determined by a reported UE capability and higher layer parameter configuration.

The UE capability may indicate whether the UE supports at least one function of the following.

- Reporting of inter-TRP amplitude One or more codebooks with different quantization granularities.
- Reporting of inter-TRP phasing One or more codebooks with different quantization granularities.
- Reporting of inter-TRP (including both amplitude and phase) coefficient One or more codebooks with different quantization granularities.
- Reporting of reference CSI indicator
- Reporting of X-TRP CQI (aggregated CJT CQIs) Reporting of an X-TRP CQI in place of a single-TRP CQI. Reporting of an X-TRP CQI in addition to a single-TRP CQI. Reporting of an X-TRP indication, such as an X-TRP CQI.
- Whether to support, for CJT CSI, common $M_v$ for plurality of TRPs or TRP-specific $M_v$
- Use of same $M_v$ size for CJT CSI

- Use of different $M_v$ sizes for CJT CSI
- Use of start offset per TRP report for CJT CSI
- Whether to support, for CJT CSI, continuous $M_v$ or discontinuous $M_v$
- Use of layer-specific $M_v$ for each TRP and for CJT CSI
- Use of $M_v$ common to plurality of layers for each TRP and for CJT CSI

The UE capability may indicate at least one value of the following. - X value in X-TRP CJT A maximum value of X in X-TRP CJT.

According to the UE capability / higher layer parameter above, the UE can implement the above functions while maintaining compatibility with an existing specification.

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

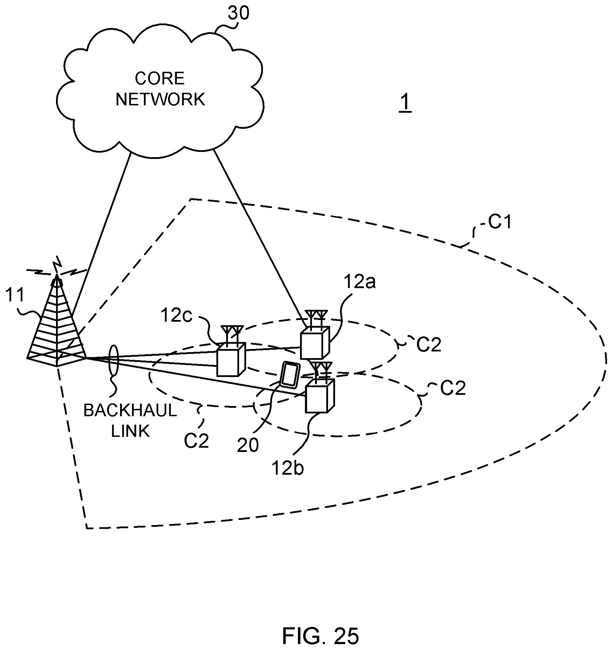

FIG. 25 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information, and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

(Base Station)

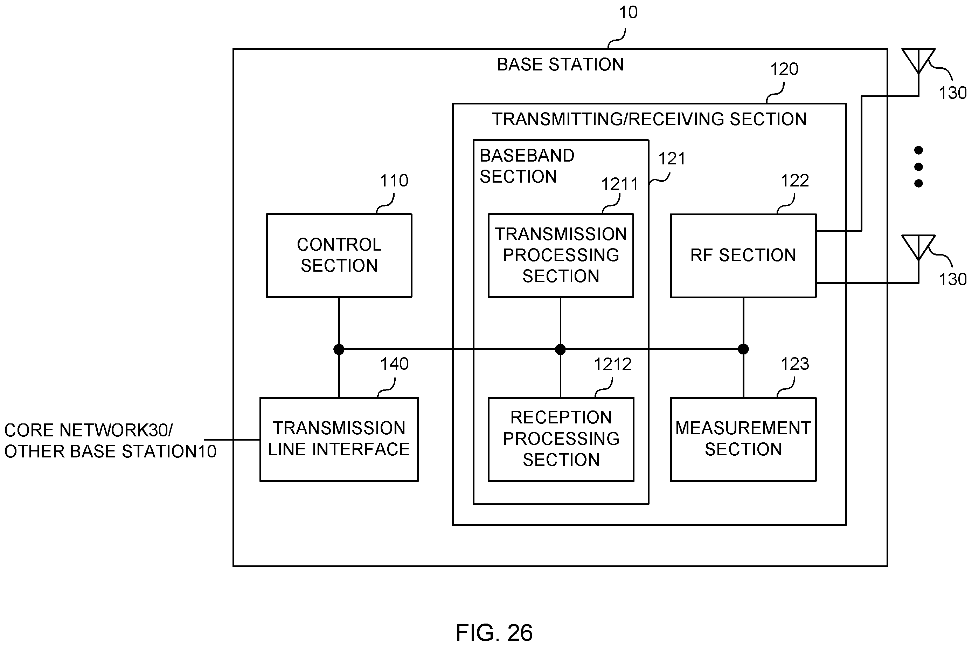

FIG. 26 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

The transmitting/receiving section 120 may transmit a configuration indicating X channel measurement resources for X transmission/reception points (TRPs) for coherent joint transmission. The control section 110 may control, based on the configuration, reception of a report of measurement of the X channel measurement resources.

The transmitting/receiving section 120 may transmit a configuration indicating X channel measurement resources for X transmission/reception points (TRPs) for coherent joint transmission. The control section 110 may control, based on the configuration, reception of a CSI report including X pieces of channel state information (CSI) corresponding to the X respective channel measurement resources.

The transmitting/receiving section 120 may transmit a configuration indicating X channel measurement resources for X transmission/reception points (TRPs) for coherent joint transmission. The control section 110 may control, based on the configuration, reception of a report of channel state information (CSI) part 1 and CSI part 2.

The transmitting/receiving section 120 may transmit a configuration of one CSI report including a plurality of channel state information (CSI) corresponding to a plurality of respective transmission/reception points for coherent joint transmission. The control section 110 may control reception of the one CSI report.

The transmitting/receiving section 120 may transmit a configuration of a CSI report including channel state information (CSI) between a plurality of transmission/reception points for coherent joint transmission. The control section 110 may control reception of the CSI report.

(User Terminal)

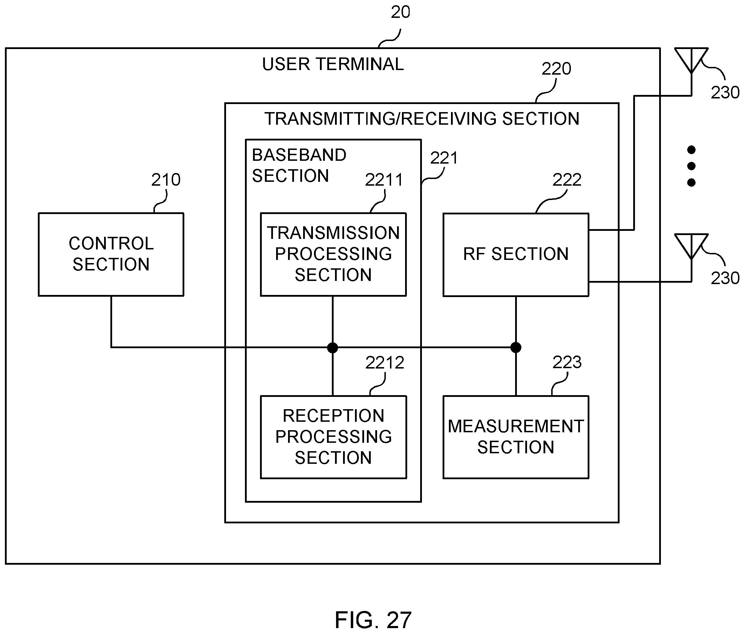

FIG. 27 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure received power (for example, RSRP), received quality (for example, RSRQ, SINR, SNR), signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive a configuration indicating X channel measurement resources for X transmission/reception points (TRPs) for coherent joint transmission. The control section 210 may control, based on the configuration, reporting of measurement of the X channel measurement resources.

The configuration may indicate at least one of X and X channel state information report configurations.

The configuration may indicate a plurality of channel state information reference signal ports.

The configuration may indicate one or X interference measurement resources.

The transmitting/receiving section 220 may receive a configuration indicating X channel measurement resources for X transmission/reception points (TRPs) for coherent joint transmission. The control section 210 may control, based on the configuration, a CSI report including X pieces of channel state information (CSI) corresponding to the respective X channel measurement resources.

Each of the X pieces of CSI may include a channel state information reference signal (CSI-RS) resource indicator (CRI) indicating a corresponding channel measurement resource, and CSI based on a corresponding channel measurement resource.

Each of the X pieces of CSI may include an index indicating a difference between at least one of phases and amplitudes between a plurality of TRPs.

i may be 2 or greater, and i th CSI may include an index indicating a difference between at least one of phases and amplitudes between at least two of first to i-1 th channel measurement resources.

The transmitting/receiving section 220 may receive a configuration indicating X channel measurement resources for X transmission/reception points (TRPs) for coherent joint transmission. The control section 210 may control, based on the configuration, reporting of channel state information (CSI) part 1 and CSI part 2.

CSI part 1 for one of the X TRPs may include at least one of a channel state information reference signal (CSI-RS) resource indicator (CRI) indicating a corresponding channel measurement resource, and a reference CSI indicator indicating one of the X channel measurement resources.

CSI part 2 for one of the X TRPs may include, for at least one of a layer and a polarization, at least one of an index indicating a difference between at least one of phases and amplitudes between a plurality of TRPs and a channel quality indicator (CQI) based on the X TRPs.

The index may be included in group 2 from among groups 0 to 2, or in group 3 after group 2.

The control section 210 may determine a plurality of channel state information (CSI) corresponding to a plurality of respective transmission/reception points for coherent joint transmission. The transmitting/receiving section 220 may transmit one CSI report including the plurality of CSI.

The plurality of CSI may be based on restriction on at least one of a rank indicator (RI), a parameter for the plurality of CSI, a maximum number of non-zero coefficients, a maximum number of spatial domain beams, and a maximum number of spatial domain vector sizes.

The terminal according to claim 1 or 2, wherein the control section 210 selects a best result from results of measurement corresponding to one of the plurality of transmission/reception points, and determines the plurality of CSI, based on the best result.

The control section 210 may assume coherent joint transmission using the plurality of transmission/reception points to determine the plurality of CSI.

The control section 210 the transmitting/receiving section 220 may determine channel state information (CSI) between a plurality of transmission/reception points for coherent joint transmission. The transmitting/receiving section 220 may transmit a CSI report including the CSI.

The CSI report may include CSI corresponding to one transmission/reception point of the plurality of transmission/reception points.

The control section 210 may select a plurality of best measurement results corresponding to the plurality of respective transmission/reception points, and may determine the CSI, based on the plurality of best measurement results.

The control section 210 may select a best measurement result corresponding to one of the plurality of transmission/reception points, and may determine the CSI, based on the best measurement result.

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

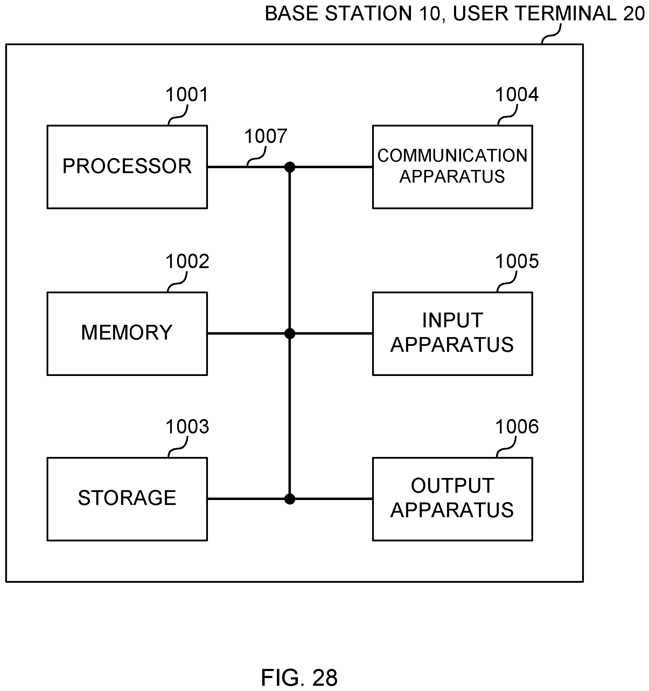

For example, a base station, a user terminal, and so on according to one embodiment of the present disclosure may function as a computer that executes the processes of the radio communication method of the present disclosure. FIG. 28 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

(Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE may not assume transmission/reception of a certain signal/channel outside active BWPs. Note that a "cell," a "carrier," and so on in the present disclosure may be interpreted as a "BWP."

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

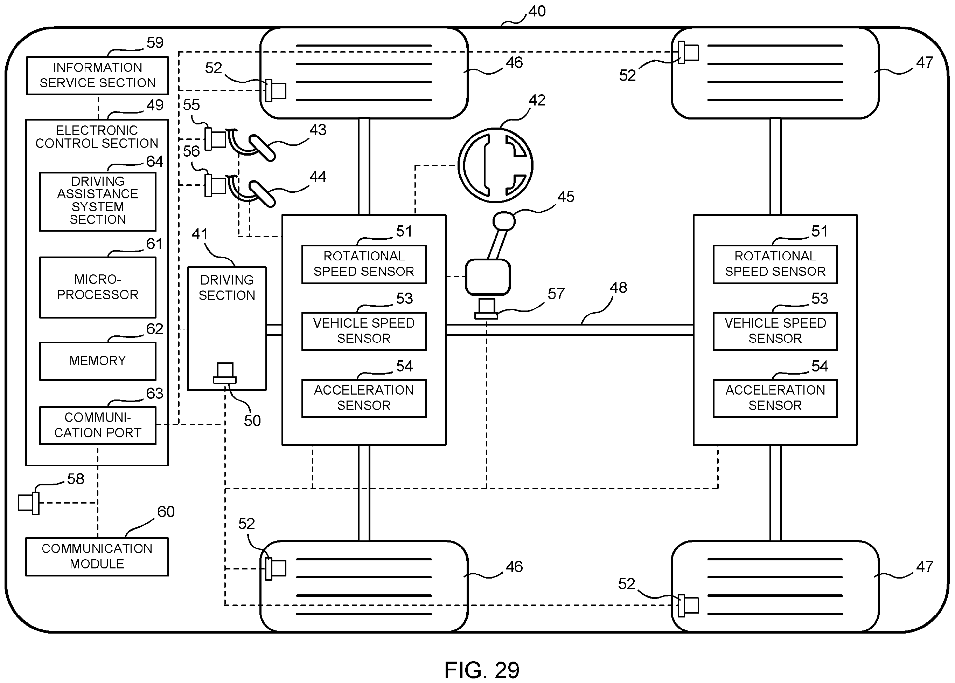

FIG. 29 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel, and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing (outputting) various pieces of information such as drive information, traffic information, and entertainment information, such as a car navigation system, an audio system, a speaker, a display, a television, and a radio, and one or more ECUs that control these devices. The information service section 59 provides various pieces of information/services (for example, multimedia information/ multimedia service) for an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the various sensors 50 to 58 described above input to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the various pieces of information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

**Claims**

1.  A terminal comprising:

    a control section that determines channel state information (CSI) between a plurality of transmission/reception points for coherent joint transmission; and
    a transmitting section that transmits a CSI report including the CSI.

2.  The terminal according to claim 1, wherein

    the CSI report includes CSI corresponding to one
    transmission/reception point of the plurality of transmission/reception points.

3.  The terminal according to claim 1 or 2, wherein
    the control section selects a plurality of best measurement results corresponding to the plurality of respective transmission/reception points, and determines the CSI, based on the plurality of best measurement results.

4.  The terminal according to claim 1 or 2, wherein
    the control section selects a best measurement result corresponding to one of the plurality of transmission/reception points, and determines the CSI, based on the best measurement result.

5. A radio communication method for a terminal, comprising:

determining channel state information (CSI) between a plurality of transmission/reception points for coherent joint transmission; and
transmitting a CSI report including the CSI.

6. A base station comprising:

a transmitting section that transmits a configuration of a channel state information (CSI) report including CSI between a plurality of transmission/reception points for coherent joint transmission; and
a control section that controls reception of the CSI report.

Mapping of elements of $i_{2,3,l}$: $k_{l,p}^{(1)}$ to $p_{l,p}^{(1)}$

| $k_{l,p}^{(1)}$ | $p_{l,p}^{(1)}$ | $k_{l,p}^{(1)}$ | $p_{l,p}^{(1)}$ | $k_{l,p}^{(1)}$ | $p_{l,p}^{(1)}$ | $k_{l,p}^{(1)}$ | $p_{l,p}^{(1)}$ |
|---|---|---|---|---|---|---|---|
| 0 | Reserved | 4 | $\left(\frac{1}{2048}\right)^{1/4}$ | 8 | $\left(\frac{1}{128}\right)^{1/4}$ | 12 | $\left(\frac{1}{8}\right)^{1/4}$ |
| 1 | $\frac{1}{\sqrt{128}}$ | 5 | $\frac{1}{2\sqrt{8}}$ | 9 | $\frac{1}{\sqrt{8}}$ | 13 | $\frac{1}{\sqrt{2}}$ |
| 2 | $\left(\frac{1}{8192}\right)^{1/4}$ | 6 | $\left(\frac{1}{512}\right)^{1/4}$ | 10 | $\left(\frac{1}{32}\right)^{1/4}$ | 14 | $\left(\frac{1}{2}\right)^{1/4}$ |
| 3 | $\frac{1}{8}$ | 7 | $\frac{1}{4}$ | 11 | $\frac{1}{2}$ | 15 | 1 |

FIG. 1

Mapping of elements of $i_{2,4,l}$: $k_{l,i,f}^{(2)}$ to $p_{l,i,f}^{(2)}$

| $k_{l,i,f}^{(2)}$ | $p_{l,i,f}^{(2)}$ |
|---|---|
| 0 | $\dfrac{1}{8\sqrt{2}}$ |
| 1 | $\dfrac{1}{8}$ |
| 2 | $\dfrac{1}{4\sqrt{2}}$ |
| 3 | $\dfrac{1}{4}$ |
| 4 | $\dfrac{1}{2\sqrt{2}}$ |
| 5 | $\dfrac{1}{2}$ |
| 6 | $\dfrac{1}{\sqrt{2}}$ |
| 7 | $1$ |

FIG. 2

gNB

Port K

Port 3

Port 2

Port 1

FIG. 3

## FIG. 4A

Rel.15/16 Type II Port Selection

gNB — Port 6, Port 5, Port 4, Port 3

## FIG. 4B

| | | | |
|---|---|---|---|
| Port 1 | $b_1$ | $b_1$ | ⋮ |
| Port 2 | $b_2$ | $b_2$ | ⋮ |
| Port 3 | $b_3$ | $b_3$ | ⋮ |
| Port 4 | $b_4$ | $b_4$ | ⋮ |
| Port 5 | $b_5$ | $b_5$ | ⋮ |
| Port 6 | $b_6$ | $b_6$ | ⋮ |
| Port 7 | $b_7$ | $b_7$ | ⋮ |
| Port 8 | $b_8$ | $b_8$ | ⋮ |

Frequency (delay)

# FIG. 5A

Rel.17 Type II Port Selection

gNB

Port 6

Port 5

Port 4

Port 3

The Same SD beam
but different FD beam

# FIG. 5B

| Port 1 | $b_1 f_{1,0}$ | $b_1 f_{1,1}$ | ... |
|---|---|---|---|
| Port 2 | $b_2 f_{2,0}$ | $b_2 f_{2,1}$ | ... |
| Port 3 | $b_3 f_{3,0}$ | $b_3 f_{3,1}$ | ... |
| Port 4 | $b_4 f_{4,0}$ | $b_4 f_{4,1}$ | ... |
| Port 5 | $b_5 f_{5,0}$ | $b_5 f_{5,1}$ | ... |
| Port 6 | $b_6 f_{6,0}$ | $b_6 f_{6,1}$ | ... |
| Port 7 | $b_7 f_{7,0}$ | $b_7 f_{7,1}$ | ... |
| Port 8 | $b_8 f_{8,0}$ | $b_8 f_{8,1}$ | ... |

Frequency (delay)

FIG. 6A

FIG. 6B

FIG. 7A

FIG. 7B

1st TRP CSI
$M_v$
$2L_1$
$L_1=4$

2nd TRP CSI
$M_v$
$2L_2$
$L_2=2$

1st TRP CSI
$M_v$
$2L$
$\beta=1/2$

2nd TRP CSI
$M_v$
$2L$
$\beta=1/4$

one SCI per layer per TRP

FIG. 8

one SCI per layer across all TRPs

FIG. 9

one SCI per layer per TRP

configured FD bases

$M_{v,1}$

1$^{st}$ TRP CSI   $2L_1$   SCI

$M_{v,2}$

2$^{nd}$ TRP CSI   $2L_2$   SCI

$M_{v,3}$

3$^{rd}$ TRP CSI   $2L_3$   SCI

$M_{v,4}$

4$^{th}$ TRP CSI   $2L_4$   SCI

FIG. 10

X=4

FIG. 11

N=2, X=4

CSI-RS resource #1

CSI-RS resource #4

CSI-RS resource #5

CSI-RS resource #8

UE

CSI-RS resource #1

CSI-RS resource #4

UE

CSI-RS resource #11

CSI-RS resource #9

FIG. 12

CSI-RS resource #1:reference

CSI-RS resource #2

associated

UE

CSI-RS resource #3

CSI-RS resource #4

FIG. 13

## FIG. 14A

| CMR configuration (Option 1-1) | CSI-RS resource #1 | CSI-RS resource #4 | CSI-RS resource #5 | CSI-RS resource #8 |
|---|---|---|---|---|
| IMR configuration (Option 2-B) | ZP CSI-RS resource #2 | ZP CSI-RS resource #2 | ZP CSI-RS resource #2 | ZP CSI-RS resource #2 |

## FIG. 14B

| CMR configuration (Option 1-1) | CSI-RS resource #1 | CSI-RS resource #4 | CSI-RS resource #5 | CSI-RS resource #8 |
|---|---|---|---|---|
| IMR configuration (Option 2-B) | ZP CSI-RS resource #2 | | | |

CSI-RS resource #1:  CRI+S-TRP CSI as reference CSI

CSI-RS resource #4:  CRI+S-TRP CSI, inter-TRP amplitude/phase PMI based on reference CSI

UE

CSI-RS resource #5:  CRI+S-TRP CSI, inter-TRP amplitude/phase PMI based on reference CSI

CSI-RS resource #8:  CRI+S-TRP CSI, inter-TRP amplitude/phase PMI based on reference CSI

FIG. 15

| PMI index | new CSI information for CJT CSI |
|---|---|
| $i_{3,1}$ | Inter-TRP phasing index (compared with reference CSI/TRP) |
| $i_{3,2}$ | Inter-TRP amplitude index (compared with reference CSI/TRP) |
| $i_3$ | Inter-TRP index (compared with reference CSI/TRP) |

FIG. 16

CSI-RS resource #1: CRI+S-TRP CSI as reference CSI

CSI-RS resource #4: CRI+S-TRP CSI, inter-TRP amplitude/phase PMI based on reference CSI

UE

CSI-RS resource #5: CRI+S-TRP CSI, inter-TRP amplitude/phase PMI based on reference CSI, and inter-TRP amplitude/phase PMI based on S-TRP CSI of CSI-RS resource#4

CSI-RS resource #8: CRI+S-TRP CSI, inter-TRP amplitude/phase PMI based on reference CSI, inter-TRP amplitude/phase PMI based on S-TRP CSI of CSI-RS resource#4, and inter-TRP amplitude/phase PMI based on S-TRP CSI of CSI-RS resource#5

FIG. 17

| PMI index | new CSI information for CJT CSI |
|---|---|
| $i_{3,1}$ | Inter-TRP phasing index (compared with reference CSI/TRP) |
| $i_{3,2}$ | Inter-TRP amplitude index (compared with reference CSI/TRP) |
| $i_{3,2}$ | Inter-TRP phasing index (compared with 2nd reported CSI/TRP) |
| $i_{3,4}$ | Inter-TRP amplitude index (compared with 2nd reported CSI/TRP) |
| $i_{3,5}$ | Inter-TRP phasing index (compared with 3rd reported CSI/TRP) |
| $i_{3,6}$ | Inter-TRP amplitude index (compared with 3rd reported CSI/TRP) |

FIG. 18

CSI-RS resource #1: CRI+S-TRP CSI as reference CSI

CSI-RS resource #4: CRI+S-TRP CSI (2-TRP CJT CQI based on CSI-RS resource #1 and #4)

UE

CSI-RS resource #5: CRI+S-TRP CSI (3-TRP CJT CQI based on CSI-RS resource #1, #4, and #5)

CSI-RS resource #8: CRI+S-TRP CSI (4-TRP CJT CQI based on CSI-RS resource #1, #4, #5, and #8)

FIG. 19

EP 4 503 718 A1

CSI-RS resource #1:  CRI+S-TRP CSI as reference CSI

CSI-RS resource #4:      CRI+S-TRP CSI, 2-TRP CJT CQI based on CSI-RS resource #1 and #4

UE

CSI-RS resource #5:      CRI+S-TRP CSI, 2-TRP CJT CQI / 3-TRP CJT CQI

CSI-RS resource #8:  CRI+S-TRP CSI, 2-TRP CJT CQI / 3-TRP CJT CQI / 4-TRP CJT CQI

FIG. 20

| Index | Value |
|-------|-------|
| 0 | Reserved or 0 |
| ... | ... |
| M-4 | $\sqrt{1/16}$ |
| M-3 | $\sqrt{1/16}$ |
| M-2 | $\sqrt{1/16}$ |
| M-1 | $\sqrt{1/16}$ |
| M | 1 |

FIG. 21

| Index | Value |
|-------|-------|
| 0 | 1 |
| 1 | $e^{j2\pi/P}$ |
| 2 | $e^{j4\pi/P}$ |
| 3 | $e^{j6\pi/P}$ |
| ... | ... |
| P-1 | $e^{j2\pi(P-1)/P}$ |

FIG. 22

| Index | Value |
|-------|-------|
| 0 | 1 |
| 1 | $e^{j\,2\pi/P}$ |
| 2 | $e^{j\,4\pi/P}$ |
| ... | ... |
| P-1 | $e^{j\,2\pi(P-1)/P}$ |
| P | $\sqrt{1/2}\,e^{j\,2\pi/P}$ |
| P+1 | $\sqrt{1/2}\,e^{j\,4\pi/P}$ |
| ... | ... |

FIG. 23

## FIG. 24A

Option 5-1

CSI part 1 for CJT CSI for 4 TRPs

| CSI part 1 for CJT CSI for a TRP (1st CJT CSI) |
| CSI part 1 for CJT CSI for a TRP (2nd CJT CSI) |
| CSI part 1 for CJT CSI for a TRP (3rd CJT CSI) |
| CSI part 1 for CJT CSI for a TRP (4th CJT CSI) |

CSI part 2 for CJT CSI for 4 TRPs

| CSI part 2 for CJT CSI for a TRP (1st CJT CSI) |
| CSI part 2 for CJT CSI for a TRP (2nd CJT CSI) |
| CSI part 2 for CJT CSI for a TRP (3rd CJT CSI) |
| CSI part 2 for CJT CSI for a TRP (4th CJT CSI) |

## FIG. 24B

Option 5-2

CSI part 1 for CJT CSI for 4 TRPs

| CSI part 1 for CJT CSI for a TRP (1st CJT CSI) |

CSI part 2 for CJT CSI for 4 TRPs

| CSI part 2 for CJT CSI for a TRP (1st CJT CSI) |
| CSI part 1 and part 2 for CJT CSI for a TRP (2nd CJT CSI) |
| CSI part 1 and part 2 for CJT CSI for a TRP (3rd CJT CSI) |
| CSI part 1 and part 2 for CJT CSI for a TRP (4th CJT CSI) |

FIG. 25

FIG. 26

BASE STATION 10

TRANSMITTING/RECEIVING SECTION 120

130 ... 130

RF SECTION 122

MEASUREMENT SECTION 123

BASEBAND SECTION 121

TRANSMISSION PROCESSING SECTION 1211

RECEPTION PROCESSING SECTION 1212

CONTROL SECTION 110

TRANSMISSION LINE INTERFACE 140

CORE NETWORK30/ OTHER BASE STATION10

FIG. 27

EP 4 503 718 A1

BASE STATION 10, USER TERMINAL 20

1001

PROCESSOR

1007

1004

COMMUNICATION APPARATUS

1002

MEMORY

1005

INPUT APPARATUS

1003

STORAGE

1006

OUTPUT APPARATUS

FIG. 28

FIG. 29

<div align="center">

**INTERNATIONAL SEARCH REPORT**

</div>

| | International application No. |
|---|---|
| | **PCT/JP2022/016133** |

### A. CLASSIFICATION OF SUBJECT MATTER

*H04W 24/10*(2009.01)i; *H04W 16/28*(2009.01)i; *H04W 72/0457*(2023.01)i
FI: H04W24/10; H04W72/04 111; H04W16/28

According to International Patent Classification (IPC) or to both national classification and IPC

### B. FIELDS SEARCHED

Minimum documentation searched (classification system followed by classification symbols)

H04W24/10; H04W16/28; H04W72/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | INTEL CORPORATION. On CSI enhancements for MTRP and FDD reciprocity [online]. 3GPP TSG RAN WG1 #103-e R1-2009452. 26 October 2020, sections 1, 2.1 particularly, sections 1, 2.1 | 1-6 |
| Y | WO 2021/213656 A1 (NOKIA TECHNOLOGIES OY) 28 October 2021 (2021-10-28) paragraphs [0027], [0029] | 1-6 |
| Y | HUAWEI, HISILICON. NR enhancements for DL MIMO [online]. 3GPP TSG RAN adhoc_2021_06_RAN_Rel18_WS RWS-210437. 28 June 2021, section 3 particularly, section 3 | 1-6 |
| Y | SAMSUNG. Issues on the trigger state definition [online]. 3GPP TSG RAN WG1 #92 R1-1801958. 26 February 2018, section 3.5 particularly, CSI enhancement for Coherent joint transmission (CJT) | 1-6 |
| Y | WO 2021/220475 A1 (NTT DOCOMO, INC.) 04 November 2021 (2021-11-04) paragraphs [0134]-[0144], fig. 13 | 3-4 |

☐ Further documents are listed in the continuation of Box C.　　☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **02 November 2022** | **15 November 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2022/016133**

| Patent document cited in search report | Publication date (day/month/year) | Patent family member(s) | Publication date (day/month/year) |
|---|---|---|---|
| WO 2021/213656 A1 | 28 October 2021 | (Family: none) | |
| WO 2021/220475 A1 | 04 November 2021 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0*, April 2010